# EUROPÄISCHE PATENTSCHRIFT

(11) **EP 4 627 404 B1**
(45) Veröffentlichungstag und Bekanntmachung des Hinweises auf die Patenterteilung: **08.07.2026**
(21) Anmeldenummer: 23804718.7
(22) Anmeldetag: 15.11.2023
(51) Int. Cl.: G02B 27/01, G02B 27/00, G02B 5/20, G06V 20/59, G08B 21/06, B60K 35/23, B32B 3/26, B32B 17/10, B32B 7/12, B32B 27/30, B60K 35/233, B60K 35/231, B60K 35/232

(54) **ANORDNUNG FÜR DIE KOMBINATION EINES FAHRERASSISTENZSYSTEMS UND EINER PROJEKTIONSANORDNUNG FÜR EIN FAHRZEUG**
ARRANGEMENT FOR THE COMBINATION OF A DRIVER ASSISTANCE SYSTEM AND A PROJECTION ARRANGEMENT FOR A VEHICLE
AGENCEMENT POUR LA COMBINAISON D'UN SYSTÈME D'ASSISTANCE AU CONDUCTEUR ET D'UN SYSTÈME DE PROJECTION POUR UN VÉHICULE

(30) Priorität: 29.11.2022 EP 22210209
(43) Veröffentlichungstag der Anmeldung: 08.10.2025
(73) Patentinhaber: Saint-Gobain Sekurit France, 60150 Thourotte (FR)
(72) Erfinder: KEWITZ, Markus, 52134 Herzogenrath (DE); GREVERATH, Julian, 52134 Herzogenrath (DE); SCHULZ, Valentin, 52134 Herzogenrath (DE)
(74) Vertreter: SGR Germany-Patents
(86) Internationale Anmeldenummer: PCT/EP2023/081904
(87) Internationale Veröffentlichungsnummer: WO 2024/115113

(56) Entgegenhaltungen:
- WO-A1-2013/058123
- WO-A1-2021/040302
- DE-A1- 102012 211 729
- DE-T5- 112017 006 376
- FR-A1- 3 073 053
- JP-A- 2019 128 389
- KR-A- 20210 100 252

## Beschreibung

Die Erfindung betrifft eine Anordnung für die Kombination eines Fahrerassistenzsystems und einer Projektionsanordnung für ein Fahrzeug, das eine Überwachung eines Fahrzeugnutzers, insbesondere des Fahrers, und das Einblenden einer Information in ein Sichtfeld des Fahrzeugnutzers ermöglicht. Des Weiteren betrifft die Erfindung ein System zum Überwachen eines Fahrzeugnutzers eines Fahrzeugs und zum Einblenden einer Information in ein Sichtfeld des Fahrzeugnutzers und die Verwendung der Anordnung in einer Kombination eines Fahrerassistenzsystems mit Überwachungsfunktion für mindestens einen Fahrzeugnutzer eines Fahrzeugs für den Verkehr zu Lande, zu Wasser oder in der Luft und einer Projektionsanordnung für das Fahrzeug.

Insbesondere Windschutzscheiben werden häufig mit Projektionsanordnungen, insbesondere sogenannten Head-Up-Displays (HUDs) ausgestattet. Mit einer Bildanzeigevorrichtung, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Head-Up-Displays sind beispielsweise aus WO 2009/071135 A1, EP 1800855 B1, DE 10 2014 220 189 A1, WO 2013/058123 A1, JP 2019 128389 A, DE 11 2017 006376 T5 oder US 2004/0135742 A1 bekannt.

Um die Bildanzeigevorrichtung vor Staub, Schmutz, Feuchtigkeit oder anderen äußeren Einflüssen zu schützen, ist diese in der Regel mit einem Abdeckelement abgedeckt. Eine Überhitzung der Bildanzeigevorrichtung kann durch Verwendung eines Abdeckelements, welches ein Infrarotstrahlung reflektierendes Element aufweist, verhindert werden.

WO 2021/040302 A1 offenbart eine Staubschutzfolie, die in einem Head-up-Display-Gerät enthalten ist.

Moderne Fahrzeuge werden häufig auch mit elektronischen Fahrerassistenzsystemen ausgerüstet, die den Fahrer bei der Führung des Fahrzeugs unterstützen, beispielsweise durch automatischen Bremseingriff bei Gefahr einer Kollision oder automatisches Spurhalten, wenn das Fahrzeug die Fahrspur verlässt. Derartige Fahrerassistenzsysteme haben sich in der Praxis sehr bewährt, insbesondere, wenn sie eine Überwachungsfunktion für den Fahrer aufweisen, etwa um frühzeitig Müdigkeit des Fahrers zu erkennen, aber auch um eine übermäßige Ablenkung von der sicheren Fahrzeugführung, beispielsweise durch Bedienen eines Mobiltelefons, zu erkennen.

Zu diesem Zweck ist es bekannt, das Gesicht und insbesondere die Augen des Fahrers mit Hilfe von Nahinfrarotstrahlung abzutasten, welche für das bloße Auge nicht sichtbar ist und somit den Fahrer und die übrigen Fahrzeuginsassen nicht stört. Hierbei können über Algorithmen Blickrichtung und Blickdauer des Fahrers erfasst werden, was beispielweise auf Müdigkeit hinweisen kann, wenn die Blickdauer in eine bestimmte Blickrichtung ungewöhnlich lange ist (stierender Blick). Andererseits kann ein zu häufiges Abwenden des Blicks von der Fahrtrichtung auf Ablenkung hinweisen. Möglich ist auch das Erkennen von Gesichtsausdrücken, welche auch einen Hinweis auf den Zustand des Fahrers geben können.

In EP 1 333 410 A2 ist eine Vorrichtung zur Blickverfolgung bzw. Eyetracking des Fahrers eines Fahrzeugs offenbart.

DE 10 2012211729A1 offenbart eine Vorrichtung zum Erfassen der Position des Fahrers eines Fahrzeugs oder eines Teils des Fahrers, insbesondere der Augen.

DE 10 2014 115 958 A1 offenbart ein System zum Überwachen eines Fahrers eines Fahrzeugs, umfassend einen Infrarotblitz zum Strahlen eines Infrarotlichts auf den Fahrer, eine Infrarotkamera zum Aufnehmen eines Bilds, das vom Strahl beleuchtet wird, einschließlich Reflexionen und eine reflektierende Infrarotfolie, die in die Windschutzscheibe des Fahrzeugs aufgenommen ist.

In US 2015/0294169 A1, US 2020/0023739 A1 und US 2020/0143184 A1 sind ebenfalls Fahrerassistenzsysteme offenbart.

Moderne Fahrerassistenzsysteme arbeiten mit Wellenlängen im Bereich von ungefähr 1 µm (Micrometer) bis 2 µm, insbesondere mit Nahinfrarotstrahlung mit einer Wellenlänge von 940 nm oder mit Nahinfrarotstrahlung mit einer Wellenlänge von 1400 nm oder mit Nahinfrarotstrahlung mit einer Wellenlänge von 1550 nm.

In US 2021/0026137 A1, US 2016/01500218 A1, KR 10-2021-0100252, FR 3 073 053 A1 und US 2020/0023739 A1 ist die Kombination von Head-Up-Displays mit Fahrerassistenzsystemen offenbart.

Die Aufgabe der vorliegenden Erfindung besteht darin, eine verbesserte Anordnung für die Kombination eines Fahrerassistenzsystems und einer Projektionsanordnung für ein Fahrzeug bereitzustellen.

Diese und weitere Aufgaben werden nach dem Vorschlag der Erfindung durch eine Anordnung und ein System gemäß den unabhängigen Patentansprüchen gelöst. Bevorzugte Ausführungsformen gehen aus den Unteransprüchen hervor.

Die Erfindung betrifft eine Anordnung für eine Kombination aus einem Fahrerassistenzsystem und einer Projektionsanordnung für ein Fahrzeug, insbesondere Kraftfahrzeug, mit Überwachungsfunktion eines Fahrzeugnutzers auf Basis von Nahinfrarotstrahlung.

Die erfindungsgemäße Anordnung für eine Kombination eines Fahrerassistenzsystems und einer Projektionsanordnung für ein Fahrzeug umfasst eine Fahrzeugscheibe mit einer Nahinfrarotstrahlung reflektierenden Funktionsschicht und einem Hauptdurchsichtsbereich, ein Modul und ein zwischen der Fahrzeugscheibe und dem Modul zum Schutz des Moduls angeordnetes Abdeckelement.

Das Modul umfasst ein Strahlungsquelle zum Aussenden von Nahinfrarotstrahlung, einen Strahlungsempfänger zum Empfangen von Nahinfrarotstrahlung und eine Bildanzeigevorrichtung.

Das Abdeckelement umfasst ein Substrat und eine auf das Substrat aufgebrachte Infrarotstrahlung reflektierende Schicht, welche eine Aussparung aufweist.

Erfindungsgemäß sind das Modul und die Fahrzeugscheibe so angeordnet und die Aussparung ist so bemessen, dass von der Strahlungsquelle ausgesendete Nahinfrarotstrahlung durch die Aussparung hindurch auf einen ersten Teilbereich der Fahrzeugscheibe treffen und im ersten Teilbereich von der Nahinfrarotstrahlung reflektierenden Funktionsschicht auf das Gesicht eines Fahrzeugnutzers reflektiert werden kann. Die von der Strahlungsquelle ausgesendete Nahinfrarotstrahlung trifft somit im ersten Teilbereich ohne vorherige Reflexion direkt auf die Nahinfrarotstrahlung reflektierende Funktionsschicht und wird von dieser reflektiert. Zur leichteren Bezugnahme wird die von der Nahinfrarotstrahlung reflektierenden Funktionsschicht reflektierte Nahinfrarotstrahlung als erste Reflexionsstrahlung bezeichnet. Hierbei trifft die erste Reflexionsstrahlung auf das Gesicht des Fahrzeugnutzers und kann vom Gesicht des Fahrzeugnutzers wieder im ersten Teilbereich auf die Nahinfrarotstrahlung reflektierende Funktionsschicht reflektiert werden. Zur leichteren Bezugnahme wird die vom Gesicht des Fahrzeugnutzers reflektierte Nahinfrarotstrahlung als zweite Reflexionsstrahlung bezeichnet. Die auf die Nahinfrarotstrahlung reflektierende Funktionsschicht auftreffende zweite Reflexionsstrahlung wird dann von der Nahinfrarotstrahlung reflektierenden Funktionsschicht reflektiert. Zur leichteren Bezugnahme wird diese von der Nahinfrarotstrahlung reflektierenden Funktionsschicht reflektierte Nahinfrarotstrahlung als dritte Reflexionsstrahlung bezeichnet. Hierbei ist der Strahlungsempfänger so angeordnet und die Aussparung ist so bemessen, dass die von der Nahinfrarotstrahlung reflektierenden Funktionsschicht reflektierte dritte Reflexionsstrahlung durch die Aussparung hindurch zum Strahlungsempfänger reflektiert und vom Strahlungsempfänger empfangen werden kann.

Die Bildanzeigevorrichtung ist so angeordnet, dass von der Bildanzeigevorrichtung ausgestrahltes sichtbares Licht auf einen zweiten Teilbereich der Fahrzeugscheibe treffen und von der Fahrzeugscheibe als reflektiertes sichtbares Licht in Richtung des Fahrzeugnutzers reflektiert werden kann.

Somit sind in der erfindungsgemäßen Anordnung das Modul und die Fahrzeugscheibe so angeordnet und die Aussparung ist so bemessen, dass von der Strahlungsquelle ausgesendete Nahinfrarotstrahlung durch die Aussparung hindurch auf einen ersten Teilbereich der Fahrzeugscheibe treffen und im ersten Teilbereich von der Nahinfrarotstrahlung reflektierenden Funktionsschicht als erste Reflexionsstrahlung auf das Gesicht eines Fahrzeugnutzers reflektiert werden kann, die erste Reflexionsstrahlung vom Gesicht des Fahrzeugnutzers als zweite Reflexionsstrahlung auf die Nahinfrarotstrahlung reflektierende Funktionsschicht im ersten Teilbereich reflektiert werden kann, und die von der Nahinfrarotstrahlung reflektierenden Funktionsschicht als dritte Reflexionsstrahlung reflektierte zweite Reflexionsstrahlung durch die Aussparung hindurch zum Strahlungsempfänger reflektiert und vom Strahlungsempfänger empfangen werden kann; und dass von der Bildanzeigevorrichtung ausgestrahltes sichtbares Licht auf einen zweiten Teilbereich der Fahrzeugscheibe treffen und von der Fahrzeugscheibe als reflektiertes sichtbares Licht in Richtung des Fahrzeugnutzers reflektiert werden kann.

Wie oben erläutert ist die Aussparung so bemessen, dass von der Strahlungsquelle ausgesendete Nahinfrarotstrahlung durch die Aussparung hindurch auf einen ersten Teilbereich der Fahrzeugscheibe treffen und dass die von der Nahinfrarotstrahlung reflektierenden Funktionsschicht als dritte Reflexionsstrahlung reflektierte zweite Reflexionsstrahlung durch die Aussparung hindurch zum Strahlungsempfänger reflektiert und vom Strahlungsempfänger empfangen werden kann. Es versteht sich, dass die Aussparung nicht in einem der Bildanzeigevorrichtung gegenüberliegendem Bereich angeordnet ist. Dies bedeutet, dass in dem der Bildanzeigevorrichtung gegenüberliegenden Bereich keine Aussparung angeordnet ist. Die Aussparung kann sich folglich auch nicht von einem Bereich, welcher der Bildanzeigevorrichtung nicht gegenüberliegt, bis in einen Bereich hinein erstrecken, welcher der Bildanzeigevorrichtung gegenüberliegt. Somit wird die Infrarotstrahlung des von außen eingestrahlten Sonnenlichts in dem der Bildanzeigevorrichtung gegenüberliegenden Bereich von der auf das Substrat aufgebrachten Infrarotstrahlung reflektierenden Schicht reflektiert und gelangt nicht bis zur Bildanzeigevorrichtung.

Die erfindungsgemäße Anordnung aus einem Fahrerassistenzsystem und einer Projektionsanordnung für ein Fahrzeug bietet den Vorteil, dass eine Überhitzung der Bildanzeigevorrichtung der Projektionsanordnung durch von außen eingestrahltes Sonnenlicht verhindert wird und zudem die Bildanzeigevorrichtung der Projektionsanordnung und die Strahlungsquelle und der Strahlungsempfänger des Fahrerassistenzsystems vor Staub, Dreck und anderen äußeren Einflüssen geschützt sind, und eine Beeinträchtigung des Strahlengangs der von der Strahlungsquelle ausgesendeten Nahinfrarotstrahlung und des Strahlengangs der vom Strahlungsempfänger empfangenen Nahinfrarotstrahlung vermieden wird.

Unter Nahinfrarotstrahlung wird im Sinne der Erfindung Strahlung mit Wellenlängen im Bereich von 800 nm bis 2500 nm, bevorzugt 800 nm bis 1600 nm verstanden. Unter Infrarotstrahlung wird im Sinne der Erfindung Strahlung mit Wellenlängen im Bereich von 780 nm und 1 mm verstanden.

Wie oben beschrieben weist die Fahrzeugscheibe eine Nahinfrarotstrahlung reflektierende Funktionsschicht auf. Die Nahinfrarotstrahlung reflektierende Funktionsschicht ist geeignet, Nahinfrarotstrahlung zu reflektieren. Die Nahinfratotstrahlung reflektierende Funktionsschicht ist direkt oder indirekt auf einer der Oberflächen der Fahrzeugscheibe oder innerhalb der Fahrzeugscheibe angeordnet. Unter ein indirekten Anordnung der Nahinfratotstrahlung reflektierende Funktionsschicht ist zu verstehen, dass zwischen der Nahinfratotstrahlung reflektierende Funktionsschicht und der Oberfläche, auf welcher diese indirekt angeordnet ist, noch mindestens eine andere Schicht angeordnet ist.

Wie oben beschrieben kann die von der Strahlungsquelle ausgesendete Nahinfrarotstrahlung durch die Aussparung in der Infrarotstrahlung reflektierenden Schicht auf einen ersten Teilbereich der Fahrzeugscheibe treffen und die von der Nahinfrarotstrahlung reflektierenden Funktionsschicht als dritte Reflexionsstrahlung reflektierte zweite Reflexionsstrahlung kann durch die Aussparung hindurch zum Strahlungsempfänger reflektiert und vom Strahlungsempfänger empfangen werden. Die Aussparung ist somit von ihren äußeren Abmessungen her an den Strahlungskegel der von der Strahlungsquelle ausgesendete Nahinfrarotstrahlung und an den Strahlungskegel der von Nahinfrarotstrahlung reflektierenden Funktionsschicht als dritte Reflexionsstrahlung reflektierten zweiten Reflexionsstrahlung angepasst. Die Länge der Aussparung beträgt beispielsweise zwischen 3 cm und 10 cm und die Breite der Aussparung beträgt beispielsweise zwischen 3 cm und 10 cm. Somit beträgt die Fläche der Aussparung bevorzugt zwischen 9 cm² und 100 cm². Die Aussparung weist bevorzugt eine mehreckige Form, besonders bevorzugt eine viereckige Form, auf. Die Aussparung kann aber auch eine kreisförmige oder eine elliptische Form aufweisen.

Wie oben beschrieben wird die von der Strahlungsquelle ausgesendete Nahinfrarotstrahlung und die von dem Gesicht des Fahrzeugnutzers ausgehende zweite Reflexionsstrahlung nur in einem ersten Teilbereich der Fahrzeugscheibe reflektiert. Gleichermaßen das von der Bildanzeigevorrichtung ausgestrahlte sichtbare Licht nur in einem zweiten Teilbereich der Fahrzeugscheibe reflektiert.

Der erste Teilbereich und der zweite Teilbereich können voneinander getrennt sein, teilweise überlappen, oder vollständig überlappen (d.h. identisch sein).

Im Rahmen dieser Anmeldung wird als Hauptdurchsichtsbereich der Bereich bezeichnet, durch den ein Fahrzeugnutzer hauptsächlich durch die Verbundscheibe sieht.

In einer bevorzugten Ausführungsform sind der erste Teilbereich und der zweite Teilbereich im Hauptdurchsichtsbereich angeordnet und überlappen bevorzugt vollständig. In einer alternativen bevorzugten Ausführungsform sind der erste Teilbereich und der zweite Teilbereich außerhalb des Hauptdurchsichtsbereichs, insbesondere in einem Randbereich, ganz besonders bevorzugt in einem unteren Randbereich, der Fahrzeugscheibe angeordnet. Auch in dieser Ausführungsform überlappen der erste Teilbereich und der zweite Teilbereich bevorzugt vollständig. In einer weiteren alternativen bevorzugten Ausführungsform ist der erste Teilbereich im Hauptdurchsichtsbereich angeordnet und der zweite Teilbereich ist außerhalb des Hauptdurchsichtsbereichs, insbesondere in einem Randbereich, ganz besonders bevorzugt in einem unteren Randbereich, der Fahrzeugscheibe angeordnet. In einer weiteren alternativen bevorzugten Ausführungsform ist der zweite Teilbereich im Hauptdurchsichtsbereich angeordnet und der erste Teilbereich ist außerhalb des Hauptdurchsichtsbereichs, insbesondere in einem Randbereich, ganz besonders bevorzugt in einem unteren Randbereich, der Fahrzeugscheibe angeordnet.

Die Fahrzeugscheibe kann optional eine Maskierungsschicht aufweisen.

In einer besonders bevorzugten Ausführungsform sind der erste Teilbereich und der zweite Teilbereich außerhalb des Hauptdurchsichtbereichs, insbesondere in einem Randbereich, der Fahrzeugscheibe angeordnet, wobei der erste und der zweite Teilbereich bevorzugt vollständig überlappen, und die Fahrzeugscheibe weist in einem Bereich, welcher außerhalb des Hauptdurchsichtsbereichs angeordnet ist und mit dem ersten Teilbereich und dem zweiten Teilbereich überlappt, eine Maskierungsschicht auf. Die Maskierungsschicht ist in dieser Ausführungsform in Durchsicht durch die Fahrzeugscheibe von der Strahlungsquelle aus gesehen hinter der Nahinfrarotstrahlung reflektierenden Funktionsschicht angeordnet.

In einer weiteren besonders bevorzugten Ausführungsform ist der erste Teilbereich im Hauptdurchsichtsbereich angeordnet, der zweite Teilbereich ist außerhalb des Hauptdurchsichtsbereichs, insbesondere in einem Randbereich, der Fahrzeugscheibe angeordnet und die Fahrzeugscheibe weist in einem Bereich, welcher außerhalb des Hauptdurchsichtsbereichs angeordnet ist und mit dem zweiten Teilbereich überlappt, eine Maskierungsschicht auf.

In einer weiteren Ausführungsform ist der zweite Teilbereich im Hauptdurchsichtbereich angeordnet, der erste Teilbereich ist außerhalb des Hauptdurchsichtsbereichs, insbesondere in einem Randbereich, der Fahrzeugscheibe angeordnet und die Fahrzeugscheibe weist in einem Bereich, welcher außerhalb des Hauptdurchsichtsbereichs angeordnet ist und mit dem ersten Teilbereich überlappt, eine Maskierungsschicht auf. Die Maskierungsschicht ist in dieser Ausführungsform in Durchsicht durch die Fahrzeugscheibe von der Strahlungsquelle aus gesehen hinter der Nahinfrarotstrahlung reflektierenden Funktionsschicht angeordnet.

In Ausführungsformen, in denen die Maskierungsschicht in einem Randbereich angeordnet ist, ist diese insbesondere im unteren Randbereich, d.h. in einem an die Unterkante der Fahrzeugscheibe angrenzenden Bereich, angeordnet.

Eine Maskierungsschicht im Sinne der Erfindung ist eine Schicht, die die Durchsicht durch die Verbundscheibe verhindert. Dabei findet eine Transmission von höchstens 5 %, bevorzugt von höchstens 2 %, besonders bevorzugt von höchstens 1 %, insbesondere von höchstens 0,1 %, des Lichtes des sichtbaren Spektrums durch die Maskierungsschicht statt. Bei der Maskierungsschicht handelt es sich somit um eine opake Maskierungsschicht, bevorzugt eine schwarze Maskierungsschicht.

Die Maskierungsschicht ist bevorzugt eine Beschichtung aus einer oder mehreren Schichten. Alternativ kann die Maskierungsschicht auch ein in die Fahrzeugscheibe eingelegtes, opakes Element oder ein gefärbter Bereich einer innerhalb der Fahrzeugscheibe angeordneten Zwischenschicht sein. Gemäß einer bevorzugten Ausgestaltung der Verbundscheibe besteht die Maskierungsschicht aus einer Einzelschicht. Dies hat den Vorteil einer besonders einfachen und kostengünstigen Fertigung der Fahrzeugscheibe, da nur eine einzige Schicht für die Maskierungsschicht ausgebildet werden muss.

Bei der Maskierungsschicht handelt es sich insbesondere um einen opaken Abdeckdruck aus einer dunklen, bevorzugt schwarzen, Emaille.

Die Fahrzeugscheibe kann eine sichtbares Licht reflektierende Schicht aufweisen. Im Sinne der Erfindung ist eine sichtbares Licht reflektierende Schicht eine Schicht, welche geeignet ist, mindestens 20 % des von der Bildanzeigevorrichtung ausgestrahlten und auf die sichtbares Licht reflektierende Schicht auftreffenden sichtbaren Lichts zu reflektieren. Somit ist die sichtbares Licht reflektierende Schicht zumindest im zweiten Teilbereich angeordnet. In Ausführungsformen, in denen die Fahrzeugscheibe eine sichtbares Licht reflektierende Schicht aufweist, strahlt die Bildanzeigevorrichtung insbesondere p-polarisiertes Licht aus, welches von der sichtbares Licht reflektierenden Schicht reflektiert werden kann.

Erfindungsgemäß ist somit auch eine Anordnung für eine Kombination eines Fahrerassistenzsystems und einer Projektionsanordnung für ein Fahrzeug, mindestens umfassend
- eine Fahrzeugscheibe mit einer Nahinfrarotstrahlung reflektierenden Funktionsschicht, einer sichtbares Licht reflektierenden Schicht und einem Hauptdurchsichtsbereich,
- ein Modul umfassend eine Strahlungsquelle zum Aussenden von Nahinfrarotstrahlung, einen Strahlungsempfänger zum Empfangen von Nahinfrarotstrahlung und eine Bildanzeigevorrichtung; und

- ein zwischen der Fahrzeugscheibe und dem Modul zum Schutz des Moduls angeordnetes Abdeckelement, welches ein Substrat und eine auf das Substrat aufgebrachte Infrarotstrahlung reflektierende Schicht umfasst,
wobei die Infrarotstrahlung reflektierende Schicht eine Aussparung aufweist; und wobei das Modul und die Fahrzeugscheibe so angeordnet sind und die Aussparung so bemessen ist, dass von der Strahlungsquelle ausgesendete Nahinfrarotstrahlung durch die Aussparung hindurch auf einen ersten Teilbereich der Fahrzeugscheibe treffen und im ersten Teilbereich von der Nahinfrarotstrahlung reflektierenden Funktionsschicht als erste Reflexionsstrahlung auf das Gesicht eines Fahrzeugnutzers reflektiert werden kann, die erste Reflexionsstrahlung vom Gesicht des Fahrzeugnutzers als zweite Reflexionsstrahlung auf die Nahinfrarotstrahlung reflektierende Funktionsschicht im ersten Teilbereich reflektiert werden kann, und die von der Nahinfrarotstrahlung reflektierenden Funktionsschicht als dritte Reflexionsstrahlung reflektierte zweite Reflexionsstrahlung durch die Aussparung hindurch zum Strahlungsempfänger reflektiert und vom Strahlungsempfänger empfangen werden kann; und dass von der Bildanzeigevorrichtung ausgestrahltes sichtbares Licht auf einen zweiten Teilbereich der Fahrzeugscheibe treffen und im zweiten Teilbereich von der sichtbares Licht reflektierenden Schicht als reflektiertes sichtbares Licht in Richtung des Fahrzeugnutzers reflektiert werden kann.

Wie oben beschrieben, versteht es sich, dass die Aussparung nicht in einem der Bildanzeigevorrichtung gegenüberliegendem Bereich angeordnet ist.

Die Fahrzeugscheibe kann wie oben beschrieben optional eine Maskierungsschicht aufweisen.

Es versteht sich, dass in Ausführungsformen, in denen die Fahrzeugscheibe der Anordnung zumindest im zweiten Teilbereich eine sichtbares Licht reflektierende Schicht und in einem Bereich, welcher außerhalb des Hauptdurchsichtsbereichs angeordnet ist und mit dem zweiten Teilbereich überlappt, eine Maskierungsschicht aufweist, in Durchsicht durch die Fahrzeugscheibe von der Bildanzeigevorrichtung aus gesehen die sichtbares Licht reflektierende Schicht vor der Maskierungsschicht angeordnet ist.

Die Nahinfrarotstrahlung reflektierende Funktionsschicht erstreckt sich vorzugsweise großflächig über die Fahrzeugscheibe. Der Ausdruck großflächig bedeutet, dass sich die Nahinfrarotstrahlung reflektierende Funktionsschicht über mindestens 50%, mindestens 60%, mindestens 70%, mindestens 75% oder bevorzugt mindestens 90% der Fahrzeugscheibe erstreckt. Die Nahinfrarotstrahlung reflektierende Funktionsschicht kann sich aber auch nur über einen Teil der Fahrzeugscheibe, welcher den ersten Teilbereich umfasst, erstrecken.

Besonders bevorzugt erstreckt sich die Nahinfrarotstrahlung reflektierende Funktionsschicht im Wesentlichen vollflächig über die Fahrzeugscheibe, d.h. vollflächig oder vollflächig mit Ausnahme eines umlaufenden Randbereichs und optional lokaler Bereiche, die als Kommunikations-, Sensor- oder Kamerafenster die Transmission von elektromagnetischer Strahlung durch die Fahrzeugscheibe gewährleisten sollen. Der umlaufende Randbereich weist beispielsweise eine Breite von bis zu 20 cm auf.

Dem Fachmann sind geeignete Nahinfrarotstrahlung reflektierenden Funktionsschichten bekannt. Bevorzugt umfasst die Nahinfrarotstrahlung reflektierende Funktionsschicht ein Schichtsystem mit mindestens einer zwischen dielektrischen Oxid- oder Nitridschichten eingebetteten Metallschicht, insbesondere mindestens einer metallischen Silberschicht.

In einer besonders bevorzugten Ausführungsform der erfindungsgemäßen Anordnung umfasst die Nahinfrarotstrahlung reflektierende Funktionsschicht ein Schichtsystem mit drei zwischen dielektrischen Oxid- oder Nitridschichten eingebetteten Silberschichten. Die Nahinfrarotstrahlung reflektierende Funktionsschicht kann beispielsweise wie eines der in der WO 2013/104438 A1 und WO 2013/104439 A1 beschriebenen Schichtsysteme auf Basis von drei Silberschichten aufgebaut sein

Zur Auswahl geeigneter Materialien und Schichtdicken, um Nahinfrarotstrahlung reflektierende Funktionsschichten zu realisieren, kann sich der Fachmann beispielsweise fachüblicher Simulationen bedienen.

Die sichtbares Licht reflektierende Schicht erstreckt sich vorzugsweise großflächig über die Fahrzeugscheibe. Der Ausdruck großflächig bedeutet, dass sich die sichtbares Licht reflektierende Schicht über mindestens 50%, mindestens 60%, mindestens 70%, mindestens 75% oder bevorzugt mindestens 90% der Fahrzeugscheibe erstreckt. Die sichtbares Licht reflektierende Schicht kann sich aber auch nur über einen Teil der Fahrzeugscheibe, welcher den zweiten Teilbereich umfasst, erstrecken.

Die sichtbares Licht reflektierende Schicht umfasst vorzugsweise mindestens ein Metall ausgewählt aus der Gruppe, bestehend aus Aluminium, Zinn, Titan, Kupfer, Chrom, Cobalt, Eisen, Mangan, Zirkonium, Cer, Yttrium, Silber, Gold, Platin und Palladium, oder Mischungen davon. In einer bevorzugten Ausführungsform der Erfindung ist die sichtbares Licht reflektierende Schicht eine Beschichtung enthaltend einen Dünnschichtstapel, also eine Schichtenfolge dünner Einzelschichten. Dieser Dünnschichtstapel enthält eine oder mehrere elektrisch leitfähige Schichten auf Basis von Silber. Die elektrisch leitfähige Schicht auf Basis von Silber verleiht der sichtbares Licht reflektierenden Schicht die grundlegenden reflektierenden Eigenschaften und eine elektrische Leitfähigkeit. Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Materialen auf der Basis von Silber sind besonders geeignet, um p-polarisiertes sichtbares Licht zu reflektieren. Die Verwendung von Silber hat sich als besonders vorteilhaft bei der Reflexion von p-polarisiertem sichtbarem Licht erwiesen. Die sichtbares Licht reflektierende Schicht weist eine Dicke von 5 nm bis 50 nm und bevorzugt von 8 nm bis 25 nm auf. Ist die sichtbares Licht reflektierende Schicht als eine Beschichtung ausgebildet so wird sie bevorzugt durch physikalische Gasphasenabscheidung (PVD), besonders bevorzugt durch Kathodenzerstäubung ("Sputtern") und ganz besonders bevorzugt durch magnetfeldunterstütze Kathodenzerstäubung ("Magnetron-Sputtern") auf die zu beschichtende Oberfläche aufgebracht. Grundsätzlich kann die Beschichtung aber auch beispielsweise mittels chemischer Gasphasenabscheidung (CVD), beispielsweise plasmagestützte Gasphasenabscheidung (PECVD), durch Aufdampfen oder durch Atomlagenabscheidung (atomic layer deposition, ALD) aufgebracht werden.

Die sichtbares Licht reflektierende Schicht kann auch als eine reflektierende Folie ausgebildet sein, die insbesondere p-polarisiertes sichtbares Licht reflektiert. Die sichtbares Licht reflektierende Schicht kann eine Trägerfolie mit einer reflektierenden Beschichtung sein oder eine reflektierende Polymerfolie. Die reflektierende Beschichtung umfasst bevorzugt mindestens eine Schicht auf Basis eines Metalls und/oder eine dielektrische Schichtabfolge mit alternierenden Brechungsindizes. Die Schicht auf Basis eines Metalls enthält bevorzugt Silber und/oder Aluminium, oder besteht daraus. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Die reflektierende Polymerfolie umfasst bevorzugt dielektrische Polymerschichten oder besteht daraus. Die dielektrischen Polymerschichten enthalten bevorzugt PET. Ist die sichtbares Licht reflektierende Schicht als eine reflektierende Folie ausgebildet, ist sie bevorzugt von 30 µm bis 300 µm, besonders bevorzugt von 50 µm bis 200 µm und insbesondere von 100 µm bis 150 µm dick. Handelt es sich um eine beschichtete, reflektierende Folie können zur Herstellung ebenfalls die Beschichtungsverfahren CVD oder PVD angewendet werden. Gemäß einer weiteren bevorzugten Ausgestaltung ist die sichtbares Licht reflektierende Schicht als reflektierende Folie ausgebildet und innerhalb der Fahrzeugscheibe angeordnet.

Zur Auswahl geeigneter Materialien und Schichtdicken, um sichtbares Licht reflektierende Schichten zu realisieren, kann sich der Fachmann beispielsweise fachüblicher Simulationen bedienen.

Die Nahinfrarotstrahlung reflektierende Funktionsschicht ist in Ausführungsformen, in denen diese zumindest bereichsweise im Hauptdurchsichtsbereich angeordnet ist, transparent für sichtbares Licht. In Ausführungsformen, in denen die Nahinfrarotstrahlung reflektierende Funktionsschicht vollständig außerhalb des Hauptdurchsichtsbereichs angeordnet ist, kann diese transparent oder intransparent für sichtbares Licht sein.

Die sichtbares Licht reflektierende Schicht ist in Ausführungsformen, in denen diese zumindest bereichsweise im Hauptdurchsichtsbereich angeordnet ist, transparent für sichtbares Licht. In Ausführungsformen, in denen die sichtbares Licht reflektierende Schicht vollständig außerhalb des Hauptdurchsichtsbereichs angeordnet ist, kann diese transparent oder intransparent für sichtbares Licht sein.

Im Sinne vorliegender Erfindung bedeutet "transparent", dass die Gesamttransmission der Windschutzscheibe den gesetzlichen Bestimmungen entspricht und für sichtbares Licht bevorzugt eine Durchlässigkeit von mehr als 70% und insbesondere von mehr als 75% aufweist. Entsprechend bedeutet "opak" eine Lichttransmission von weniger als 15%, vorzugsweise weniger als 5%, insbesondere 0%. Die Werte für die Lichttransmission (TL) beziehen sich (wie für Automobilverglasungen üblich) auf die Lichtart A, d.h. den sichtbaren Anteil des Sonnenlichts bei einer Wellenlänge von 380 nm bis 780 nm, also im Wesentlichen das sichtbare Spektrum der Sonnenstrahlung.

Die Bildanzeigevorrichtung dient der Ausstrahlung eines Bildes, kann also auch als Projektor, Anzeigevorrichtung oder bildgebende Einheit bezeichnet werden. Als Bildanzeigevorrichtung kann beispielsweise auch ein Display oder auch eine andere dem Fachmann bekannte Vorrichtung verwendet werden. Weist die Fahrzeugscheibe eine sichtbares Licht reflektierende Schicht und eine dahinterliegende Maskierungsschicht auf, so ist die bildgebende Einheit bevorzugt ein Display, besonders bevorzugt ein LCD-Display, LED-Display, OLED-Display oder elektrolumineszentes Display, insbesondere ein LCD-Display. Displays sind im Vergleich zu anderen Bildanzeigevorrichtungen wesentlich energiesparender zu betreiben. Die vergleichsweise geringere Helligkeit von Displays ist bei Kombination einer sichtbares Licht reflektierenden Schicht und einer dahinterliegenden Maskierungsschicht völlig ausreichend.

Die Strahlung der Bildanzeigevorrichtung trifft vorzugsweise mit einem Einfallswinkel von 55° bis 80°, bevorzugt von 62° bis 77°, auf den zweiten Teilbereich der Fahrzeugscheibe. Der Einfallswinkel ist der Winkel zwischen dem Einfallsvektor der Strahlung der Bildanzeigevorrichtung und der Flächennormale im geometrischen Zentrum der Fahrzeugscheibe.

In der vorliegenden Anmeldung wird die Anordnung von Strahlungsquelle, Strahlungsempfänger und Bildanzeigevorrichtung als Modul bezeichnet. Bei der Strahlungsquelle, dem Strahlungsempfänger und der Bildanzeigevorrichtung handelt es sich typischerweise um eigenständige Bauteile. Die Bauteile in dem Modul können aber auch miteinander verbunden und somit als eine Einheit ausgebildet sein.

In bevorzugten Ausführungsformen der erfindungsgemäßen Anordnung sind in dem Modul die Strahlungsquelle, der Strahlungsempfänger und die Bildanzeigevorrichtung hintereinander oder nebeneinander angeordnet. Insbesondere sind die Strahlungsquelle, der Strahlungsempfänger und die Bildanzeigevorrichtung in einer Reihe parallel zur Erstreckung der Fahrzeugscheibe von Seitenkante zu Seitenkante angeordnet.

Das Modul und das Abdeckelement können in eine Öffnung einer Oberseite der Konsole des Fahrzeugs aufgenommen sein. Bevorzugt sind das Modul und das Abdeckelement in die Öffnung der Konsole so eingesetzt, dass das Abdeckelement im Wesentlichen bündig mit der Oberseite abschließt oder an dieser angrenzt.

Besonders bevorzugt ist die Öffnung in der Oberseite der Konsole, in der das Modul und das Abdeckelement aufgenommen sind, zwischen dem Lenkrad und der Fahrzeugscheibe angeordnet. Auf diese Weise sind das Abdeckelement und das Modul für den Fahrzeugnutzer praktisch nicht sichtbar.

Wie oben beschrieben umfasst das Abdeckelement ein Substrat und eine auf das Substrat aufgebrachte Infrarotstrahlung reflektierende Schicht, wobei die Infrarotstrahlung reflektierende Schicht eine Aussparung aufweist.

Das Substrat kann eine Kunststoffscheibe oder eine Glasscheibe sein. Das Substrat weist bevorzugt eine Dicke von 0,1 mm bis 3 mm auf.

Bevorzugt ist die Infrarotstrahlung reflektierende Schicht auf diejenige Oberseite des Substrats aufgebracht, welche in Richtung des Moduls weist. Es ist aber auch möglich, dass die Infrarotstrahlung reflektierende Schicht auf diejenige Oberseite des Substrats aufgebracht ist, welche in Richtung der Fahrzeugscheibe weist. Zudem ist es möglich, dass auf beiden Oberflächen des Substrats eine Infrarotstrahlung reflektierende Schicht aufgebracht ist.

Dem Fachmann sind geeignete Infrarotstrahlung reflektierende Schichten bekannt. Die Infrarotstrahlung reflektierende Schicht ist bevorzugt als eine mehrschichtige dielektrische Beschichtung oder Folie ausgebildet. Zur Auswahl geeigneter Materialien und Schichtdicken, um Infrarotstrahlung reflektierende Schichten zu realisieren, kann sich der Fachmann beispielsweise fachüblicher Simulationen bedienen.

Ist die Infrarotstrahlung reflektierende Schicht als eine dielektrische Folie ausgebildet, so ist die Folie mittels einer Klebeschicht mit dem Substrat verbunden. Die Klebeschicht kann beispielsweise ein optisch klarer Kleber sein.

Die Infrarotstrahlung reflektierende Schicht kann auch als eine beschichtete Folie ausgebildet sein, welche über eine Klebeschicht mit dem Substrat verbunden ist. Eine solche Folie weist bevorzugt eine Dicke von 10 µm bis 2 mm auf.

Die Fahrzeugscheibe ist dafür vorgesehen, in einer Fensteröffnung eines Fahrzeugs den Innenraum gegenüber der äußeren Umgebung abzutrennen. Bevorzugt ist die Fahrzeugscheibe als Windschutzscheibe ausgebildet.

In einer bevorzugten Ausführungsform der erfindungsgemäßen Anordnung ist die Fahrzeugscheibe eine Verbundscheibe und weist eine Außenscheibe und eine Innenscheibe, die über eine thermoplastische Zwischenschicht miteinander verbunden sind, auf. Die Fahrzeugscheibe weist insbesondere eine Oberkante und eine Unterkante, sowie zwei dazwischen verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Im Falle einer als Windschutzscheibe ausgebildeten Fahrzeugscheibe wird die Oberkante häufig auch als Dachkante und die Unterkante als Motorkante bezeichnet.

Mit Innenscheibe wird im Sinne der Erfindung die dem Fahrzeuginnenraum zugewandte Scheibe der Fahrzeugscheibe bezeichnet. Mit Außenscheibe wird die der äußeren Umgebung zugewandte Scheibe bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die außenseitige Oberfläche der Außenscheibe wird als Seite I bezeichnet. Die innenraumseitige Oberfläche der Außenscheibe wird als Seite II bezeichnet. Die außenseitige Oberfläche der Innenscheibe wird als Seite III bezeichnet. Die innenraumseitige Oberfläche der Innenscheibe wird als Seite IV bezeichnet.

In einer bevorzugten Ausführungsform ist die Nahinfrarotstrahlung reflektierende Funktionsschicht auf der innenraumseitigen Oberfläche der Außenscheibe angeordnet. Die Nahinfrarotstrahlung reflektierende Funktionsschicht ist in dieser Ausführungsform insbesondere als eine Beschichtung der innenraumseitigen Oberfläche der Außenscheibe ausgebildet.

In einer alternativen bevorzugten Ausführungsform ist die Nahinfrarotstrahlung reflektierende Funktionsschicht auf der außenseitigen Oberfläche der Innenscheibe angeordnet. Die Nahinfrarotstrahlung reflektierende Funktionsschicht ist in dieser Ausführungsform insbesondere als eine Beschichtung der außenseitigen Oberfläche der Innenscheibe ausgebildet.

Besonders bevorzugt ist die Ausführungsform einer erfindungsgemäßen Anordnung, in der die Nahinfrarotstrahlung reflektierende Funktionsschicht auf der außenseitigen Oberfläche der Innenscheibe angeordnet ist. Diese Ausführungsform bietet gegenüber der Ausführungsform, in der die Nahinfrarotstrahlung reflektierende Funktionsschicht auf der innenraumseitigen Oberfläche der Außenscheibe angeordnet ist, den Vorteil, dass die von der Strahlungsquelle ausgehende Nahinfrarotstrahlung und die zweite Reflexionsstrahlung nicht die thermoplastische Zwischenschicht passieren müssen, bevor sie auf die Nahinfrarotstrahlung reflektierende Zwischenschicht treffen und die erste Reflexionsstrahlung und die dritte Reflexionsstrahlung ebenfalls nicht die thermoplastische Zwischenschicht passieren müssen, bevor sie auf das Gesicht des Fahrzeugnutzers bzw. den Strahlungsempfänger treffen.

In einer weiteren bevorzugten Ausführungsform ist die Nahinfratotstrahlung reflektierende Funktionsschicht direkt oder indirekt auf der innenraumseitigen Oberfläche der Innenscheibe angeordnet.

In Ausführungsformen, in denen die Fahrzeugscheibe als eine Verbundscheibe ausgebildet ist und eine Maskierungsschicht aufweist, ist die Maskierungsschicht bevorzugt als ein auf der innenraumseitigen Oberfläche der Außenscheibe angeordneter opaker Abdeckdruck ausgebildet, insbesondere aus einer dunklen, bevorzugt schwarzen, Emaille. Alternativ kann die Maskierungsschicht als ein auf der außenseitigen Oberfläche der Innenscheibe angeordneter opaker Abdeckdruck ausgebildet sein, insbesondere aus einer dunklen, bevorzugt schwarzen, Emaille. Alternativ kann die Maskierungsschicht als ein auf der innenraumseitigen Oberfläche der Innenscheibe angeordneter opaker Abdeckdruck ausgebildet sein, insbesondere aus einer dunklen, bevorzugt schwarzen, Emaille.

In einer alternativen bevorzugten Ausführungsform ist die Maskierungsschicht als ein opak gefärbter Bereich der thermoplastischen Zwischenschicht ausgebildet. In einer Ausführungsform ist die thermoplastische Zwischenschicht einstückig ausgebildet und in einem Bereich opak gefärbt. Eine als ein opak gefärbter Bereich der thermoplastischen Zwischenschicht ausgebildete Maskierungsschicht kann auch realisiert werden, in dem eine aus einer opaken thermoplastischen Folie und einer transparenten thermoplastischen Folie zusammengesetzte thermoplastische Zwischenschicht eingesetzt wird. Die opake thermoplastische Folie und transparente thermoplastische Folie werden vorzugsweise versetzt voneinander angeordnet, sodass sich beide Folien in Durchsicht durch die Verbundscheibe nicht überdecken. Die transparente und die opake thermoplastische Folie bestehen aus dem gleichen Kunststoff oder enthalten vorzugsweise den gleichen Kunststoff. Die Materialien auf dessen Basis die opake thermoplastische Folie und die transparente thermoplastische Folie ausgebildet sein können, sind jene, die auch für die thermoplastische Zwischenschicht beschrieben sind. Die opake thermoplastische Folie ist vorzugsweise eine gefärbte Folie, die verschiedene Farben, insbesondere schwarz, aufweisen kann.

Ausführungsformen, in denen die Maskierungsschicht als ein auf der innenraumseitigen Oberfläche der Innenscheibe angeordneter opaker Abdeckdruck ausgebildet ist und in denen die Fahrzeugscheibe eine sichtbares Licht reflektierende Schicht aufweist, sind besonders bevorzugt. Wie oben beschrieben ist in diesen Ausführungsformen die sichtbares Licht reflektierende Schicht in Durchsicht durch die Fahrzeugscheibe von der Bildanzeigevorrichtung aus gesehen vor der Maskierungsschicht angeordnet, sofern die Maskierungsschicht mit dem zweiten Teilbereich überlappt.

Die Außenscheibe und die Innenscheibe enthalten oder bestehen bevorzugt aus Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Die Außenscheibe und die Innenscheibe sind bevorzugt klar und farblos. Die Außenscheibe und die Innenscheibe können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Dicke der Außenscheibe und der Innenscheibe kann breit variieren und den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Beispielsweise ist die Außenscheibe 2,1 mm dick und die Innenscheibe 1,6 mm dick. Es kann sich bei der Außenscheibe oder insbesondere der Innenscheibe aber auch um Dünnglas mit einer Dicke von beispielsweise 0,55 mm handeln. Die Größe der Außenscheibe und der Innenscheibe kann breit variieren und richtet sich nach der Verwendung.

Die thermoplastische Zwischenschicht enthält oder besteht aus mindestens einem thermoplastischen Kunststoff, bevorzugt Polyvinylbutyral (PVB), Ethylenvinylacetat (EVA) und/oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharz, Acrylat, fluorinierte Ethylen-Propylen, Polyvinylfluorid und/oder Ethylen-Tetrafluorethylen, oder ein Copolymer oder Gemisch davon enthalten. Die thermoplastische Zwischenschicht kann durch eine oder mehrere übereinander angeordnete thermoplastische Folien ausgebildet werden, wobei die Dicke einer thermoplastischen Folie bevorzugt von 0,25 mm bis 1 mm beträgt, typischerweise 0,38 mm oder 0,76 mm. Es kann sich bei der thermoplastischen Zwischenschicht auch um eine Folie mit funktionellen Eigenschaften, beispielsweise eine Folie mit akustisch dämpfenden Eigenschaften handeln. Die thermoplastische Zwischenschicht kann einen rechteckigen Querschnitt oder einen keilförmigen Querschnitt aufweisen. Insbesondere in Ausführungsformen, in denen die Fahrzeugscheibe keine sichtbares Licht reflektierende Schicht aufweist und somit das von der Bildanzeigevorrichtung ausgestrahlte sichtbare Licht von der innenraumseitigen Oberfläche der Fahrzeugscheibe reflektiert wird, weist die thermoplastische Zwischenschicht bevorzugt einen keilförmigen Querschnitt auf.

In einer bevorzugten Ausführungsform ist der Strahlungsempfänger zum Detektieren eines Gesichtszustandes des Fahrzeugnutzers vorgesehen, wobei der Fahrzeugnutzer, dessen Gesichtszustand detektiert wird, bevorzugt der Fahrer des Fahrzeugs ist.

In einer bevorzugten Ausführungsform der erfindungsgemäßen Anordnung ist der Fahrzeugnutzer der Fahrer des Fahrzeugs.

Die Erfindung erstreckt sich weiterhin auf ein System zum Überwachen eines Fahrzeugnutzers eines Fahrzeugs und zum Einblenden einer Information in ein Sichtfeld des Fahrzeugnutzers, welches eine erfindungsgemäße Anordnung umfasst. Das System umfasst weiterhin mindestens einen Aktor und/oder mindestens eine Signalausgabevorrichtung, sowie eine elektronische Kontrolleinrichtung, welche dazu eingerichtet ist, auf Basis eines Ausgangssignals des Strahlungsempfängers Informationen über den Fahrzeugnutzer zu ermitteln und auf Basis der ermittelten Informationen ein elektrisches Signal an den mindestens einen Aktor zum Ausführen einer mechanischen Aktion und/oder an die mindestens eine Signalausgabevorrichtung zum Ausgeben eines optischen und/oder akustischen Signals abzugeben.

Die vorstehend beschriebenen bevorzugten Ausgestaltungen der erfindungsgemäßen Anordnung gelten entsprechend auch für das erfindungsgemäße System zum Überwachen eines Fahrzeugnutzers eines Fahrzeugs und zum Einblenden einer Information in ein Sichtfeld des Fahrzeugnutzers.

Des Weiteren erstreckt sich die Erfindung auf die Verwendung der erfindungsgemäßen Anordnung in einer Kombination eines Fahrerassistenzsystems mit Überwachungsfunktion für einen Fahrzeugnutzer eines Fahrzeugs, insbesondere Kraftfahrzeugs, für den Verkehr zu Lande, zu Wasser oder in der Luft und einer Projektionsanordnung für das Fahrzeug.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen näher erläutert. Gleiche bzw. gleichwirkende Elemente sind mit dem gleichen Bezugszeichen versehen. Es zeigen in vereinfachter, nicht maßstabsgetreuer Darstellung:
- Fig. 1: eine schematische Ansicht des vorderen Teils eines Fahrzeugs mit Fahrzeugnutzer mit einer Ausführungsform einer erfindungsgemäßen Anordnung für eine Kombination eines Fahrerassistenzsystems und einer Projektionsanordnung,
- Fig. 2: eine schematische Ansicht des vorderen Teils eines Fahrzeugs mit Fahrzeugnutzer mit einer weiteren Ausführungsform einer erfindungsgemäßen Anordnung für eine Kombination eines Fahrerassistenzsystems und einer Projektionsanordnung,
- Fig. 3: eine schematische Ansicht des vorderen Teils eines Fahrzeugs mit Fahrzeugnutzer mit einer weiteren Ausführungsform einer erfindungsgemäßen Anordnung für eine Kombination eines Fahrerassistenzsystems und einer Projektionsanordnung,
- Fig. 4: eine schematische Ansicht des vorderen Teils eines Fahrzeugs mit Fahrzeugnutzer mit einer weiteren Ausführungsform einer erfindungsgemäßen Anordnung für eine Kombination eines Fahrerassistenzsystems und einer Projektionsanordnung,
- Fig. 5: einen Querschnitt durch einen vergrößerten Ausschnitt einer Ausführungsform einer erfindungsgemäßen Anordnung,
- Fig. 6: einen Querschnitt durch einen vergrößerten Ausschnitt einer weiteren Ausführungsform einer erfindungsgemäßen Anordnung,
- Fig. 7: einen Querschnitt durch einen vergrößerten Ausschnitt einer weiteren Ausführungsform einer erfindungsgemäßen Anordnung,
- Fig. 8: eine Draufsicht auf das Abdeckelement in einer Ausführungsform einer erfindungsgemäßen Anordnung,
- Fig. 9: einen Querschnitt durch eine Ausführungsform einer Fahrzeugscheibe,
- Fig. 10: einen Querschnitt durch eine weitere Ausführungsform einer Fahrzeugscheibe,
- Fig. 11: einen Querschnitt durch eine weitere Ausführungsform einer Fahrzeugscheibe,
- Fig. 12: einen Querschnitt durch eine weitere Ausführungsform einer Fahrzeugscheibe,
- Fig. 13: einen Querschnitt durch eine weitere Ausführungsform einer Fahrzeugscheibe,
- Fig. 14: einen Querschnitt durch eine weitere Ausführungsform einer Fahrzeugscheibe,
- Fig. 15: einen Querschnitt durch eine weitere Ausführungsform einer Fahrzeugscheibe,
- Fig. 16: einen Querschnitt durch eine weitere Ausführungsform einer Fahrzeugscheibe,
- Fig. 17: einen Querschnitt durch eine weitere Ausführungsform einer Fahrzeugscheibe,
- Fig. 18: einen Querschnitt durch eine weitere Ausführungsform einer Fahrzeugscheibe,
- Fig. 19: einen Querschnitt durch eine weitere Ausführungsform einer Fahrzeugscheibe.

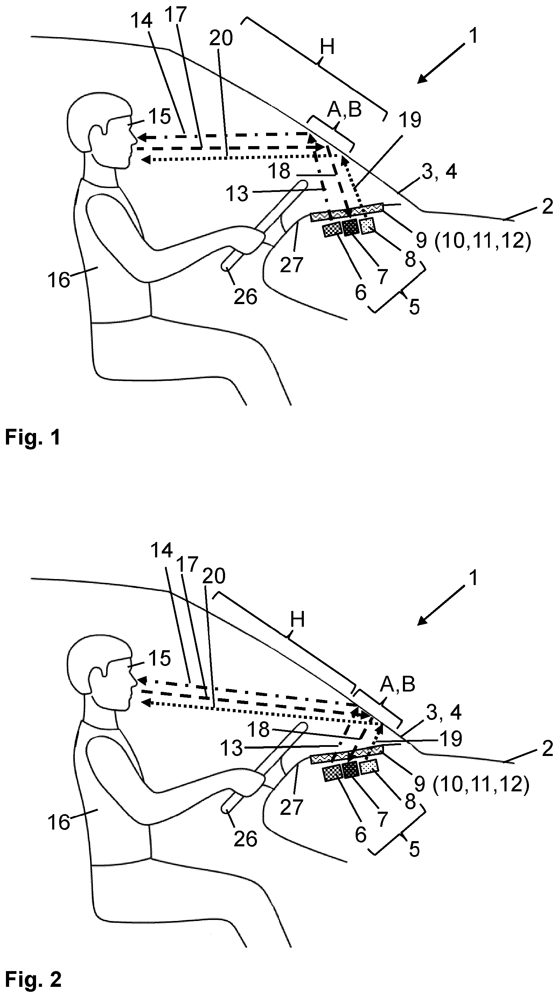

In Fig. 1 ist eine schematische Ansicht des vorderen Teils eines Fahrzeugs 2 mit einem Fahrzeugnutzer 16 mit einer erfindungsgemäßen Anordnung 1 für eine Kombination eines Fahrerassistenzsystems und einer Projektionsanordnung dargestellt.

Die erfindungsgemäße Anordnung 1 umfasst eine Fahrzeugscheibe 3 eines Fahrzeugs 2, mit einer Nahinfrarotstrahlung reflektierende Funktionsschicht 4, wobei die Fahrzeugscheibe 3 einen Hauptdurchsichtsbereich H aufweist.

Die Anordnung 1 umfasst weiterhin ein Modul 5 umfassend eine Strahlungsquelle 6 zum Aussenden von Nahinfrarotstrahlung, einen Strahlungsempfänger 7 zum Empfangen von Nahinfrarotstrahlung und eine Bildanzeigevorrichtung 8, die, wie in Fig. 1 schematisch gezeigt, nebeneinander angeordnet sind, jedoch alternativ beispielsweise auch hintereinander angeordnet oder miteinander kombiniert sein können. Sowohl die Strahlungsquelle 6 als auch der Strahlungsempfänger 7 als auch die Bildanzeigevorrichtung 8 sind hier beispielsweise im hinteren Bereich der Konsole 27 verbaut, wo sie für Fahrzeugnutzer 16 praktisch nicht sichtbar sind.

Zwischen der Fahrzeugscheibe 3 und dem Modul 5 ist ein Abdeckelement 9 zum Schutz des Moduls 5 angeordnet. Das Abdeckelement 9 umfasst ein Substrat 10 und eine auf das Substrat 10 aufgebrachte Infrarotstrahlung reflektierende Schicht 11, wobei die Infrarotstrahlung reflektierende Schicht 11 eine Aussparung 12 aufweist.

Das Modul 5 und das Abdeckelement 9 sind in der in der Fig. 1 gezeigten Ausführungsform in eine Öffnung einer Oberseite der Konsole 27 des Fahrzeugs 2 aufgenommen, wobei das Modul 5 und das Abdeckelement 9 in die Öffnung so eingesetzt sind, dass das Abdeckelement 9 im Wesentlichen bündig mit der Oberseite abschließt.

Die Strahlungsquelle 6 ist so positioniert und ausgerichtet, dass die von der Strahlungsquelle 6 ausgesendete Nahinfrarotstrahlung 13 durch die Aussparung 12 auf einen ersten Teilbereich A der Fahrzeugscheibe 3 trifft und im ersten Teilbereich A von der Nahinfrarotstrahlung reflektierenden Funktionsschicht 4 als erste Reflexionsstrahlung 14 auf das Gesicht 15 eines Fahrzeugnutzers 16 reflektiert wird. Vom Gesicht 15 des Fahrzeugnutzers 16 wird die erste Reflexionsstrahlung 14 als zweite Reflexionsstrahlung 17 auf die Nahinfrarotstrahlung reflektierende Funktionsschicht 4 im ersten Teilbereich A reflektiert. Von der Nahinfrarotstrahlung reflektierenden Funktionsschicht 4 wird die zweite Reflexionsstrahlung 17 als dritte Reflexionsstrahlung 18 durch die Aussparung 12 hindurch zum Strahlungsempfänger 7 reflektiert. Der Strahlungsempfänger 7 ist auf den ersten Teilbereich A der Fahrzeugscheibe 3 gerichtet und kann die von der Nahinfrarotstrahlung reflektierenden Funktionsschicht 4 reflektierte dritte Reflexionsstrahlung 18 empfangen.

Die Bildanzeigevorrichtung 8 ist auf einen zweiten Teilbereich B der Fahrzeugscheibe 3 gerichtet, so dass von der Bildanzeigevorrichtung 8 ausgestrahltes sichtbares Licht 19 auf den zweiten Teilbereich B der Fahrzeugscheibe 3 treffen und von der Fahrzeugscheibe 3 als reflektiertes sichtbares Licht 20 in Richtung des Fahrzeugnutzers 15 reflektiert werden kann.

In der in der Fig. 1 gezeigten Ausführungsform überlappen der erste Teilbereich A und der zweite Teilbereich B vollständig, d.h. sie sind identisch, und der erste Teilbereich A und der zweite Teilbereich B sind im vollständig im Hauptdurchsichtsbereich H angeordnet.

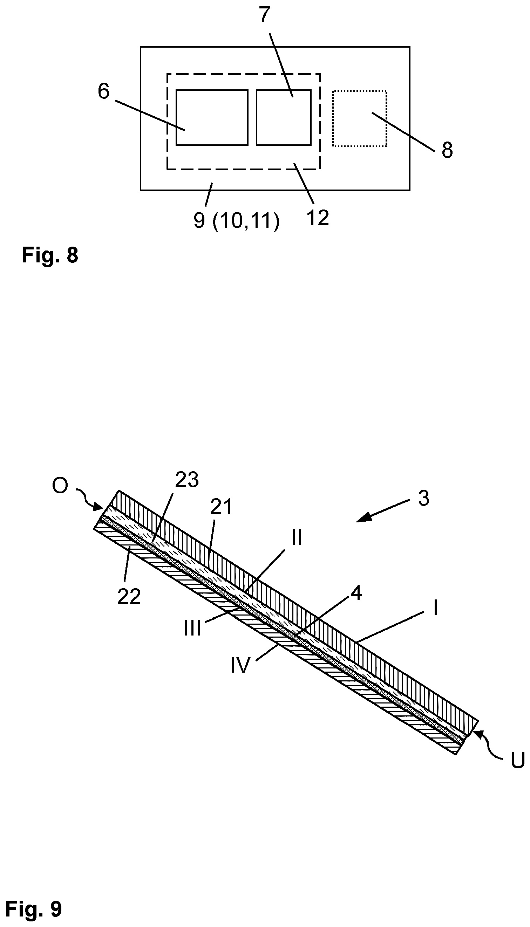

Die Fahrzeugscheibe 3 kann in der in der Fig. 1 gezeigten Ausführungsform beispielsweise wie in den Fig. 9 bis 14, 17 oder 18 gezeigt aufgebaut sein.

In Fig. 2 ist eine schematische Ansicht des vorderen Teils eines Fahrzeugs 2 mit einem Fahrzeugnutzer 15 mit einer weiteren Ausführungsform einer erfindungsgemäßen Anordnung 1 für eine Kombination eines Fahrerassistenzsystems und einer Projektionsanordnung dargestellt.

Die in der Fig. 2 gezeigte Ausführungsform unterscheidet sich von der in der Fig. 1 gezeigten Ausführungsform nur dahingehend, dass der erste Teilbereich A und der zweite Teilbereich B außerhalb des Hauptdurchsichtsbereichs H in einem Randbereich nahe der Motorkante der Fahrzeugverbundscheibe 3 angeordnet sind.

Die Fahrzeugscheibe 3 kann in der in der Fig. 2 gezeigten Ausführungsform beispielsweise wie in den Fig. 9 bis 19 gezeigt aufgebaut sein.

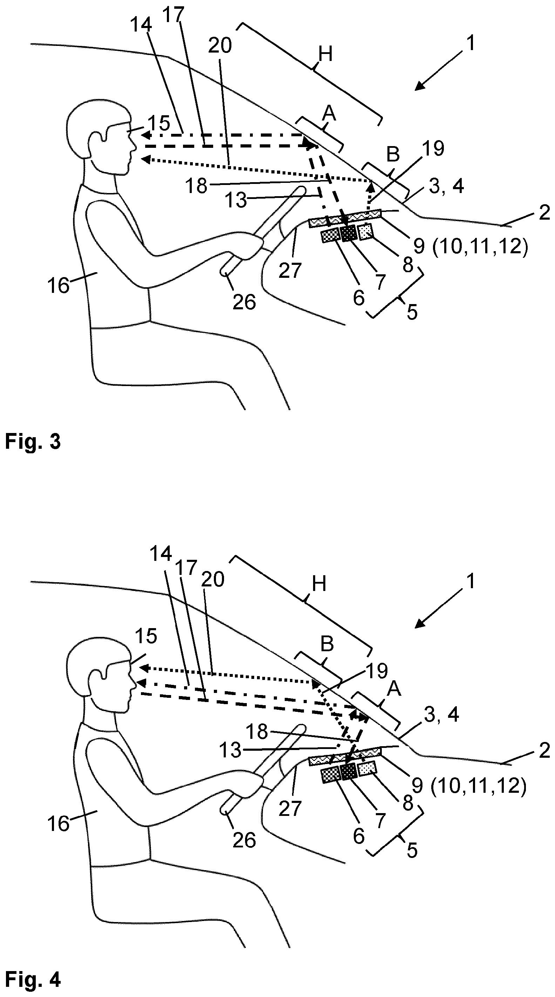

In Fig. 3 ist eine schematische Ansicht des vorderen Teils eines Fahrzeugs 2 mit einem Fahrzeugnutzer 15 mit einer weiteren Ausführungsform einer erfindungsgemäßen Anordnung 1 für eine Kombination eines Fahrerassistenzsystems und einer Projektionsanordnung dargestellt.

Die in der Fig. 3 gezeigte Ausführungsform unterscheidet sich von der in der Fig. 1 gezeigten Ausführungsform nur dahingehend, dass der erste Teilbereich A im Hauptdurchsichtsbereich angeordnet ist und der zweite Teilbereich B außerhalb des Hauptdurchsichtsbereichs H in einem Randbereich nahe der Motorkante der Fahrzeugverbundscheibe 3 angeordnet ist.

Die Fahrzeugscheibe 3 kann in der in der Fig. 3 gezeigten Ausführungsform beispielsweise wie in den Fig. 9 bis 18 gezeigt aufgebaut sein.

In Fig. 4 ist eine schematische Ansicht des vorderen Teils eines Fahrzeugs 2 mit einem Fahrzeugnutzer 15 mit einer weiteren Ausführungsform einer erfindungsgemäßen Anordnung 1 für eine Kombination eines Fahrerassistenzsystems und einer Projektionsanordnung dargestellt.

Die in der Fig. 4 gezeigte Ausführungsform unterscheidet sich von der in der Fig. 1 gezeigten Ausführungsform nur dahingehend, dass der zweite Teilbereich B im Hauptdurchsichtsbereich angeordnet ist und der erste Teilbereich A außerhalb des Hauptdurchsichtsbereichs H in einem Randbereich nahe der Motorkante der Fahrzeugverbundscheibe 3 angeordnet ist.

Die Fahrzeugscheibe 3 kann in der in der Fig. 4 gezeigten Ausführungsform beispielsweise wie in den Fig. 9 bis 14, 17 oder 18 gezeigt aufgebaut sein.

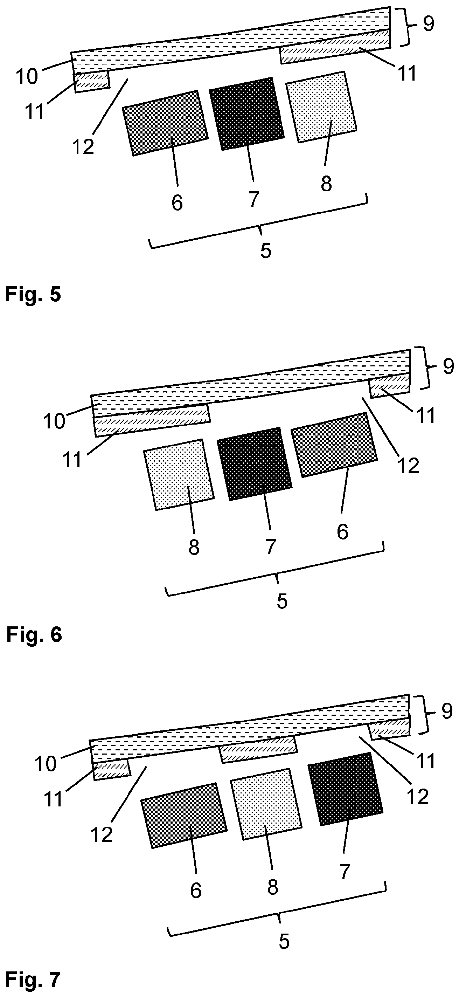

Fig. 5 zeigt einen Querschnitt durch einen vergrößerten Ausschnitt einer Ausführungsform einer erfindungsgemäßen Anordnung 1. In dem Ausschnitt sind das Modul 5 und das Abdeckelement 9 vergrößert gezeigt. Die Anordnung 1 ist beispielsweise wie in der Fig. 1, 2, 3 oder 4 ausgebildet.

In der in der Fig. 5 ausschnittsweise gezeigten Ausführungsform sind in dem Modul 5 die Strahlungsquelle 6 zum Aussenden von Nahinfrarotstrahlung, der Strahlungsempfänger 7 zum Empfangen von Nahinfrarotstrahlung und die Bildanzeigevorrichtung 8 nebeneinander angeordnet, wobei der Strahlungsempfänger 7 zwischen der Strahlungsquelle 6 und der Bildanzeigevorrichtung 8 angeordnet ist.

Die Abdeckung umfasst ein Substrat 10 und eine Infrarotstrahlung reflektierende Schicht 11, welche eine Aussparung 12 aufweist. Die Infrarotstrahlung reflektierende Schicht 11 ist auf derjenigen Oberfläche des Substrats 10 angeordnet, welche in Richtung des Moduls 5 weist. Alternativ könnte die Infrarotstrahlung reflektierende Schicht 11 auf derjenigen Oberfläche des Substrats 10 angeordnet sein, welche von dem Modul 5 weg weist, oder auf sowohl auf derjenigen Oberfläche des Substrats 10 angeordnet sein, welche in Richtung des Moduls 5 weist, als auch auf derjenigen Oberfläche, welche von dem Modul 5 weg weist. Die Aussparung 12 ist derartig angeordnet und bemessen, dass von der Strahlungsquelle 6 ausgesendete Nahinfrarotstrahlung 13 durch die Aussparung 12 auf einen ersten Teilbereich A der Fahrzeugscheibe 3 treffen kann und dass von der Nahinfrarotstrahlung reflektierenden Funktionsschicht 4 als dritte Reflexionsstrahlung 18 reflektierte zweite Reflexionsstrahlung 17 durch die Aussparung 12 hindurch zum Strahlungsempfänger 7 reflektiert werden kann. Da in der Fig. 5 nur ein Ausschnitt gezeigt ist, ist zur Vereinfachung in der Fig. 5 der Strahlengang der Nahinfrarotstrahlung nicht eingezeichnet. Der Fig. 5 ist zu entnehmen, dass in dem Bereich der zum Modul 5 weisenden Oberfläche des Substrats 10, welche der Bildanzeigevorrichtung 8 gegenüberliegt, die Infrarotstrahlung reflektierende Schicht 11 keine Aussparung 12 aufweist. Somit ist die Bildanzeigevorrichtung 8 durch die Infrarotstrahlung reflektierende Schicht 11 vor einem Erwärmen durch Sonneneinstrahlung geschützt.

Das Substrat 10 ist beispielsweise eine Kunststoffscheibe und die Infrarotstrahlung reflektierende Schicht 11 ist beispielsweise als eine mehrschichtige dielektrische Beschichtung ausgebildet.

Fig. 6 zeigt einen Querschnitt durch einen vergrößerten Ausschnitt einer weiteren Ausführungsform einer erfindungsgemäßen Anordnung 1. In dem Ausschnitt sind das Modul 5 und das Abdeckelement 9 vergrößert gezeigt. Die in der Fig. 6 gezeigte Ausführungsform unterscheidet sich von der in der Fig. 5 gezeigten nur hinsichtlich der Anordnung der Strahlungsquelle 6 zum Aussenden von Nahinfrarotstrahlung, des Strahlungsempfängers 7 zum Empfangen von Nahinfrarotstrahlung und der Bildanzeigevorrichtung 8. Diese sind nebeneinander angeordnet, wobei der Strahlungsempfänger 7 zwischen der Strahlungsquelle 6 und der Bildanzeigevorrichtung 8 angeordnet ist. Im Gegensatz zu der in der Fig. 5 gezeigten Ausführungsform ist jedoch die Positionen der Strahlungsquelle 6 zum Aussenden von Nahinfrarotstrahlung der Bildanzeigevorrichtung 8 vertauscht.

Fig. 7 zeigt einen Querschnitt durch einen vergrößerten Ausschnitt einer weiteren Ausführungsform einer erfindungsgemäßen Anordnung 1. In dem Ausschnitt ist das Modul 5 und das Abdeckelement 9 vergrößert gezeigt. Die in der Fig. 7 gezeigte Ausführungsform unterscheidet sich von der in der Fig. 5 gezeigten nur hinsichtlich der Anordnung der Strahlungsquelle 6 zum Aussenden von Nahinfrarotstrahlung, des Strahlungsempfängers 7 zum Empfangen von Nahinfrarotstrahlung und der Bildanzeigevorrichtung 8. Diese sind nebeneinander angeordnet, wobei die Bildanzeigevorrichtung 8 zwischen der Strahlungsquelle 6 und dem Strahlungsempfänger 7 angeordnet ist.

Die Aussparung 12 ist derartig angeordnet und bemessen, dass von der Strahlungsquelle 6 ausgesendete Nahinfrarotstrahlung 13 durch die Aussparung 12 auf einen ersten Teilbereich A der Fahrzeugscheibe 3 treffen kann und dass von der Nahinfrarotstrahlung reflektierenden Funktionsschicht 4 als dritte Reflexionsstrahlung 18 reflektierte zweite Reflexionsstrahlung 17 durch die Aussparung 12 hindurch zum Strahlungsempfänger 7 reflektiert werden kann. Somit ist die Aussparung 12 in der in der Fig. 7 gezeigten Ausführungsform in zwei Bereichen ausgebildet. Da in der Fig. 7 nur ein Ausschnitt gezeigt ist, ist zur Vereinfachung in der Fig. 7 der Strahlengang der Nahinfrarotstrahlung nicht eingezeichnet. Der Fig. 7 ist zu entnehmen, dass in dem Bereich der zum Modul 5 weisenden Oberfläche des Substrats 10, welche der Bildanzeigevorrichtung 8 gegenüberliegt, die Infrarotstrahlung reflektierende Schicht 11 keine Aussparung 12 aufweist. Somit ist die Bildanzeigevorrichtung 8 durch die Infrarotstrahlung reflektierende Schicht 11 vor einem Erwärmen durch Sonneneinstrahlung geschützt.

Fig. 8 zeigt eine Draufsicht auf das Abdeckelement 9 in einer Ausführungsform einer erfindungsgemäßen Anordnung 1. Die Anordnung 1 kann beispielsweise wie in einer der Fig. 1 bis 4 gezeigt ausgebildet sein. Die Strahlungsquelle 6 zum Aussenden von Nahinfrarotstrahlung, der Strahlungsempfänger 7 zum Empfangen von Nahinfrarotstrahlung und die Bildanzeigevorrichtung 8 sind nebeneinander angeordnet, wobei der Strahlungsempfänger 7 zwischen der Strahlungsquelle 6 und der Bildanzeigevorrichtung 8 angeordnet ist. Der Umriss der Aussparung 12 in der Infrarotstrahlung reflektierenden Schicht 11 ist in der Fig. 8 gestrichelt dargestellt. Die Aussparung 12 weist in der gezeigten Ausführungsform eine rechteckige Form auf. Die Aussparung kann aber auch eine andere mehreckige Form oder eine kreisförmige oder eine elliptische Form aufweisen. Es versteht sich, dass auch die Strahlungsquelle 6 zum Aussenden von Nahinfrarotstrahlung, der Strahlungsempfänger 7 zum Empfangen von Nahinfrarotstrahlung und/oder die Bildanzeigevorrichtung 8 nicht zwingend einen viereckigen Umriss haben müssen, sondern alternativ auch einen anderen mehreckigen Umriss oder einen kreisförmigen oder einen elliptischen Umriss aufweisen können.

Fig. 9 zeigt einen Querschnitt durch eine Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein.

In der in der Fig. 9 gezeigten Ausführungsform umfasst die Fahrzeugscheibe 3 eine Außenscheibe 21 mit einer außenseitigen Oberfläche I, einer innenraumseitigen Oberfläche II und eine Innenscheibe 22 mit einer außenseitigen Oberfläche III und einer innenraumseitigen Oberfläche IV, die über eine thermoplastische Zwischenschicht 23 miteinander verbunden sind. Zudem weist die Fahrzeugscheibe 3 eine Nahinfrarotstrahlung reflektierende Funktionsschicht 4 auf. Die Fahrzeugscheibe 3 weist eine Oberkante O und eine Unterkante U, sowie zwei dazwischen verlaufende Seitenkanten auf.

Die Außenscheibe 21 besteht beispielsweise aus Kalk-Natron-Glas und weist beispielsweise eine Dicke von 2,1 mm auf. Die Innenscheibe 22 besteht beispielweise aus Kalk-Natron-Glas und weist eine beispielsweise Dicke von 1,6 m auf. Die thermoplastische Zwischenschicht 23 besteht beispielsweise aus PVB und weist einen keilförmigen Querschnitt mit einer Dicke von beispielsweist 0,76 mm am dünneren Ende auf.

In der in der Fig. 9 gezeigten Ausführungsform ist die Nahinfrarotstrahlung reflektierende Funktionsschicht 4 als eine Beschichtung der außenseitigen Oberfläche III der Innenscheibe 22 ausgebildet.

Die Nahinfrarotstrahlung reflektierende Funktionsschicht 4 umfasst beispielsweise ein Schichtsystem mit mindestens einer zwischen dielektrischen Oxid- oder Nitridschichten eingebetteten Metallschicht, insbesondere mindestens einer metallischen Silberschicht.

Bei einer erfindungsgemäßen Anordnung 1 mit einer Fahrzeugscheibe 3 mit dem in Fig. 9 gezeigten Aufbau wird das von der Bildanzeigevorrichtung 8 ausgestrahlte sichtbare Licht 19 von der innenraumseitigen Oberfläche IV der Innenscheibe 22 in Richtung des Fahrzeugnutzers 16 reflektiert und vom Fahrzeugnutzer 16 als virtuelles Bild (von ihm aus gesehen) hinter der Fahrzeugscheibe 3 wahrgenommen.

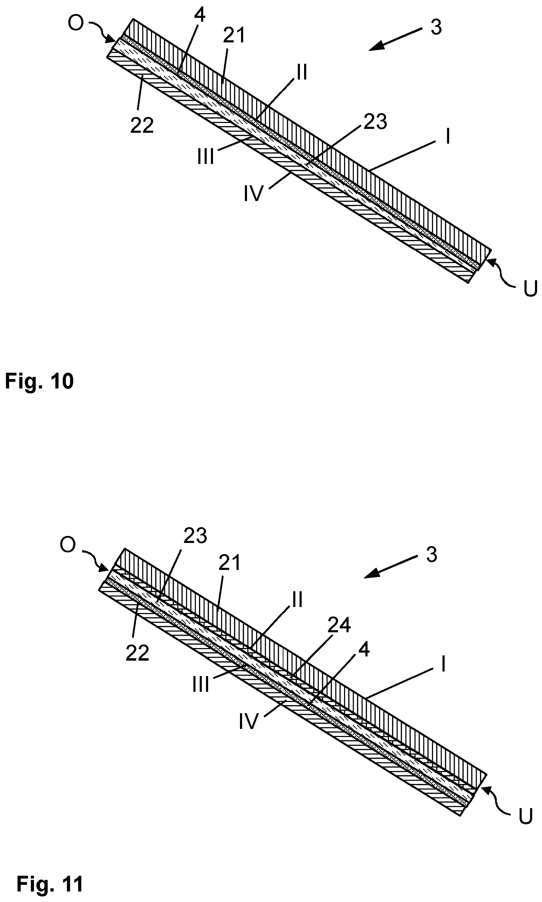

Fig. 10 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 10 gezeigte Ausführungsform unterscheidet sich von der in der Fig. 9 gezeigten nur dahingehend, dass die Nahinfrarotstrahlung reflektierende Funktionsschicht 4 nicht als eine Beschichtung der außenseitigen Oberfläche III der Innenscheibe 22, sondern als eine Beschichtung der innenraumseitigen Oberfläche II der Außenscheibe 21 ausgebildet ist.

Bei einer erfindungsgemäßen Anordnung 1 mit einer Fahrzeugscheibe 3 mit dem in Fig. 10 gezeigten Aufbau wird das von der Bildanzeigevorrichtung 8 ausgestrahlte Licht 19 von der innenraumseitigen Oberfläche IV der Innenscheibe 22 in Richtung des Fahrzeugnutzers 16 reflektiert und vom Fahrzeugnutzer 16 als virtuelles Bild (von ihm aus gesehen) hinter der Fahrzeugscheibe 3 wahrgenommen.

Fig. 11 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 11 gezeigte Ausführungsform unterscheidet sich von der in der Fig. 9 gezeigten nur dahingehend, dass die thermoplastische Zwischenschicht 23 einen rechteckigen Querschnitt aufweist und die Fahrzeugscheibe 3 zusätzlich eine sichtbares Licht reflektierende Schicht 24 aufweist, welche zwischen der thermoplastischen Zwischenschicht 23 und der Außenscheibe 21 angeordnet ist.

Bei einer erfindungsgemäßen Anordnung 1 mit einer Fahrzeugscheibe 3 mit dem in Fig. 11 gezeigten Aufbau strahlt die Bildanzeigevorrichtung 8 bevorzugt p-polarisiertes Licht aus und das ausgestrahlte Licht 19 wird von der sichtbares Licht reflektierenden Schicht 24 in Richtung des Fahrzeugnutzers 16 reflektiert und vom Fahrzeugnutzer 16 als virtuelles Bild (von ihm aus gesehen) hinter der Fahrzeugscheibe 3 wahrgenommen.

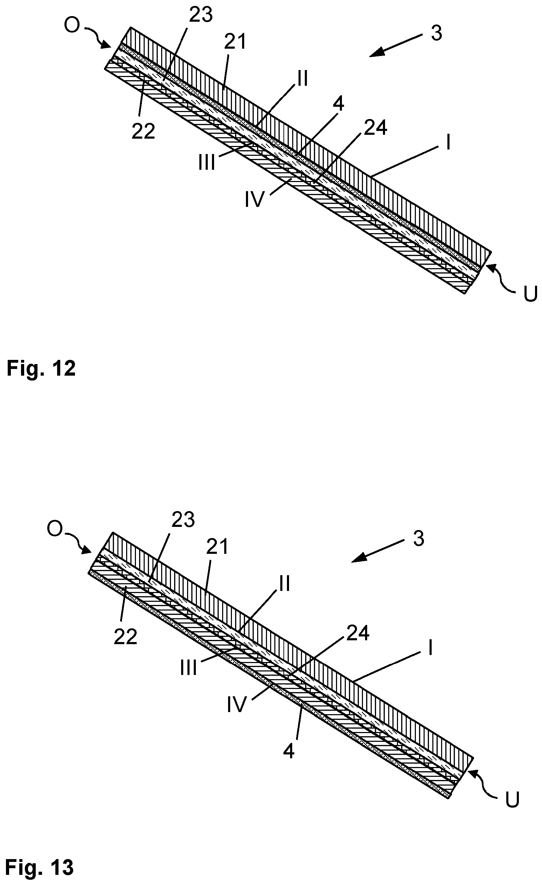

Fig. 12 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 12 gezeigte Ausführungsform unterscheidet sich von der in der Fig. 10 gezeigten nur dahingehend, dass die thermoplastische Zwischenschicht 23 einen rechteckigen Querschnitt aufweist und die Fahrzeugscheibe 3 zusätzlich eine sichtbares Licht reflektierende Schicht 24 aufweist, welche zwischen der thermoplastischen Zwischenschicht 23 und der Innenscheibe 22 angeordnet ist.

Bei einer erfindungsgemäßen Anordnung 1 mit einer Fahrzeugscheibe 3 mit dem in Fig. 12 gezeigten Aufbau strahlt die Bildanzeigevorrichtung 8 bevorzugt p-polarisiertes Licht aus und das ausgestrahlte Licht 19 wird von der sichtbares Licht reflektierenden Schicht 24 in Richtung des Fahrzeugnutzers 16 reflektiert und vom Fahrzeugnutzer als virtuelles Bild (von ihm aus gesehen) hinter der Fahrzeugscheibe 3 wahrgenommen.

Fig. 13 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 13 gezeigte Ausführungsform unterscheidet sich von der in der Fig. 12 gezeigten nur dahingehend, dass die Nahinfrarotstrahlung reflektierende Funktionsschicht 4 nicht auf der innenraumseitigen Oberfläche II der Außenscheibe 21, sondern auf der innenraumseitigen Oberfläche IV der Innenscheibe 22 angeordnet ist.

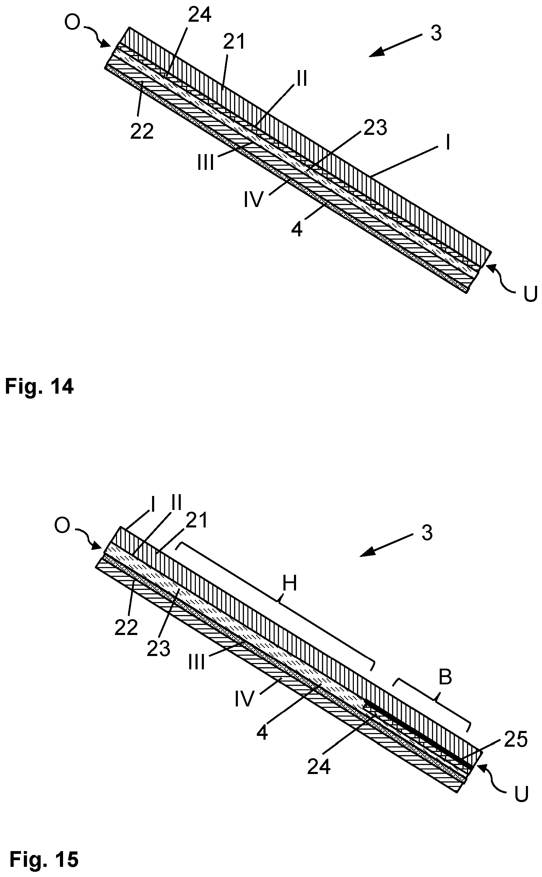

Fig. 14 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 14 gezeigte Ausführungsform unterscheidet sich von der in der Fig. 11 gezeigten nur dahingehend, dass die Nahinfrarotstrahlung reflektierende Funktionsschicht 4 nicht auf der außenseitigen Oberfläche III der Innenscheibe 22, sondern auf der innenraumseitigen Oberfläche IV der Innenscheibe 22 angeordnet ist.

Fig. 15 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 2 oder 3 gezeigt aufgebaut sein. Die in der Fig. 15 gezeigte Ausführungsform unterscheidet sich von der in der Fig. 11 gezeigten nur dahingehend, dass die Fahrzeugscheibe 3 in einem an die Unterkante U angrenzenden Randbereich außerhalb des Hauptdurchsichtsbereichs H eine zwischen der sichtbares Licht reflektierenden Schicht 24 und der Außenscheibe 21 angeordnete Maskierungsschicht 25 aufweist. Die Maskierungsschicht 25 ist beispielsweise als ein auf die innenraumseitige Oberfläche II der Außenscheibe 21 aufgebrachter opaker Abdeckdruck aus einer schwarzen Emaille ausgebildet. Zudem ist die sichtbares Licht reflektierende Schicht 24 nur in dem an die Unterkante U angrenzenden Randbereich angeordnet. Der zweite Teilbereich B ist außerhalb des Hauptdurchsichtsbereichs H angeordnet. Der erste Teilbereich A kann in einem Bereich im Hauptdurchsichtsbereich H oder in einem Bereich außerhalb des Hauptdurchsichtsbereichs H angeordnet sein.

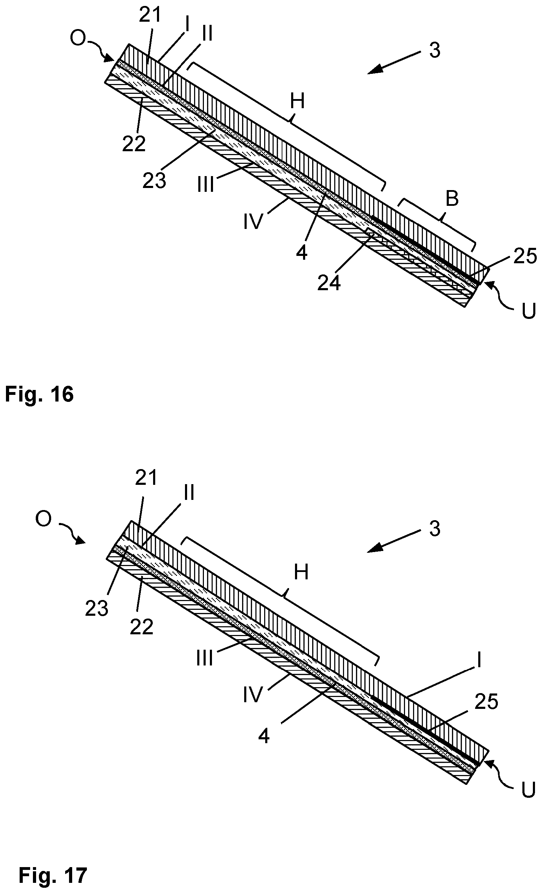

Fig. 16 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 2 oder 3 gezeigt aufgebaut sein. Die in der Fig. 16 gezeigte Ausführungsform unterscheidet sich von der in der Fig. 12 gezeigten nur dahingehend, dass die Fahrzeugscheibe 3 in einem an die Unterkante U angrenzenden Randbereich außerhalb des Hauptdurchsichtsbereichs H eine zwischen der Nahinfrarotstrahlung reflektierenden Funktionsschicht 4 und der Außenscheibe 21 angeordnete Maskierungsschicht 25 aufweist. Die Maskierungsschicht 25 ist beispielsweise als ein auf die innenraumseitige Oberfläche II der Außenscheibe 21 aufgebrachter opaker Abdeckdruck aus einer schwarzen Emaille ausgebildet. Zudem ist die sichtbares Licht reflektierende Schicht 24 nur in dem an die Unterkante U angrenzenden Randbereich angeordnet. Der zweite Teilbereich B ist außerhalb des Hauptdurchsichtsbereichs H angeordnet. Der erste Teilbereich A kann in einem Bereich im Hauptdurchsichtsbereich H oder in einem Bereich außerhalb des Hauptdurchsichtsbereichs H angeordnet sein.

Fig. 17 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 17 gezeigte Ausführungsform unterscheidet sich von der in der Fig. 9 gezeigten nur dahingehend, dass die Fahrzeugscheibe 3 in einem an die Unterkante U angrenzenden Randbereich außerhalb des Hauptdurchsichtsbereichs H eine zwischen der thermoplastischen Zwischenschicht 23 und der Außenscheibe 21 angeordnete Maskierungsschicht 25 aufweist. Die Maskierungsschicht 25 ist beispielsweise als ein auf die innenraumseitige Oberfläche II der Außenscheibe 21 aufgebrachter opaker Abdeckdruck aus einer schwarzen Emaille ausgebildet. Der erste Teilbereich A kann in einem Bereich im Hauptdurchsichtsbereich H oder in einem Bereich außerhalb des Hauptdurchsichtsbereichs H angeordnet sein. Der zweite Teilbereich B kann in einem Bereich im Hauptdurchsichtsbereich H oder in einem Bereich außerhalb des Hauptdurchsichtsbereichs H angeordnet sein.

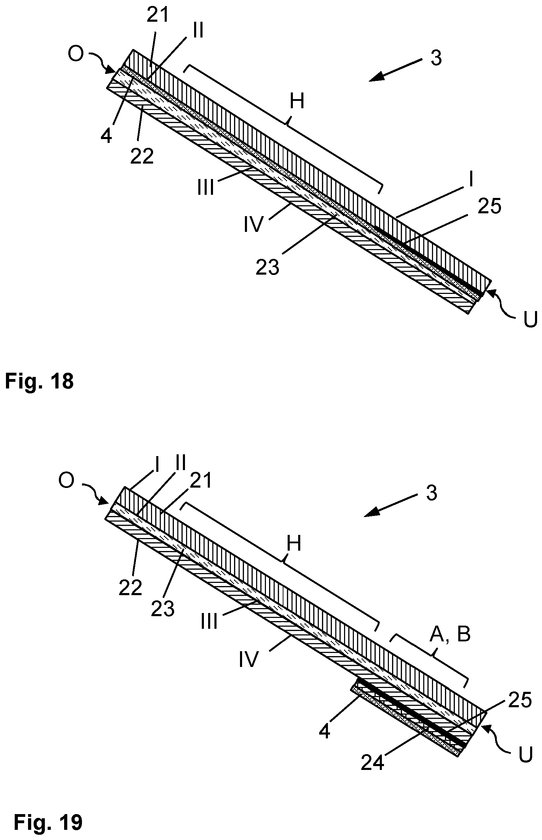

Fig. 18 zeigt einen Querschnitt durch eine weitere Ausführungsform einer Fahrzeugscheibe 3 einer erfindungsgemäßen Anordnung 1. Die Anordnung 1 kann wie beispielsweise in den Fig. 1, 2, 3 oder 4 gezeigt aufgebaut sein. Die in der Fig. 18 gezeigte Ausführungsform unterscheidet sich von der in der Fig. 10 gezeigten nur dahingehend, dass die Fahrzeugscheibe 3 in einem an die Unterkante U angrenzenden Randbereich außerhalb des Hauptdurchsichtsbereichs H eine zwischen der Nahinfrarotstrahlung reflektierenden Funktionsschicht 4 und der Außenscheibe 21 angeordnete Maskierungsschicht 25 aufweist. Die Maskierungsschicht 25 ist beispielsweise als ein auf die innenraumseitige Oberfläche II der Außenscheibe 21 aufgebrachter opaker Abdeckdruck aus einer schwarzen Emaille ausgebildet. Der erste Teilbereich A kann in einem Bereich im Hauptdurchsichtsbereich H oder in einem Bereich außerhalb des Hauptdurchsichtsbereichs H angeordnet sein. Der zweite Teilbereich B kann in einem Bereich im Hauptdurchsichtsbereich H oder in einem Bereich außerhalb des Hauptdurchsichtsbereichs H angeordnet sein.

Fig. 19 zeigt einen Querschnitt durch eine weitere Ausführungsform einer Fahrzeugscheibe 3 einer erfindungsgemäßen Anordnung 1. Die Anordnung 1 kann wie beispielsweise in der Fig. 2 gezeigt aufgebaut sein.

In der in der Fig. 19 gezeigten Ausführungsform umfasst die Fahrzeugscheibe 3 eine Außenscheibe 21 mit einer außenseitigen Oberfläche I, einer innenraumseitigen Oberfläche II und eine Innenscheibe 22 mit einer außenseitigen Oberfläche III und einer innenraumseitigen Oberfläche IV, die über eine thermoplastische Zwischenschicht 23 miteinander verbunden sind. Die Fahrzeugscheibe weist eine Oberkante O und eine Unterkante U, sowie zwei dazwischen verlaufende Seitenkanten auf.

Die Außenscheibe 21 besteht beispielsweise aus Kalk-Natron-Glas und weist beispielsweise eine Dicke von 2,1 mm auf. Die Innenscheibe 22 besteht beispielweise aus Kalk-Natron-Glas und weist eine beispielsweise Dicke von 1,6 m auf. Die thermoplastische Zwischenschicht 23 besteht beispielsweise aus PVB und weist einen rechteckigen Querschnitt mit einer Dicke von beispielsweist 0,76 mm auf.

In der in der Fig. 19 gezeigten Ausführungsform ist auf die innenraumseitige Oberfläche IV der Innenscheibe 22 in einem an die Unterkante U angrenzenden Randbereich außerhalb des Hauptdurchsichtsbereichs H eine Maskierungsschicht 25 angeordnet. Die Maskierungsschicht 25 ist beispielsweise ein opaker Abdeckdruck aus einer schwarzen Emaille. Auf der Maskierungsschicht 25 ist eine sichtbares Licht reflektierende Schicht 24 aufgebraucht und auf dieser eine Nahinfrarotstrahlung reflektierende Funktionsschicht 4. Optional können zwischen der Maskierungsschicht 25 und der sichtbares Licht reflektierenden Schicht 24 und/oder zwischen der sichtbares Licht reflektierenden Schicht 24 und der Nahinfrarotstrahlung reflektierenden Schicht Klebeschichten, beispielsweise in Form einer thermoplastischen Zwischenschicht oder eines optisch klaren Klebers angeordnet sein.

Die Nahinfrarotstrahlung reflektierende Funktionsschicht 4 umfasst beispielsweise ein Schichtsystem mit mindestens einer zwischen dielektrischen Oxid- oder Nitridschichten eingebetteten Metallschicht, insbesondere mindestens einer metallischen Silberschicht.

Die Nahinfrarotstrahlung reflektierende Funktionsschicht 4 und die sichtbares Licht reflektierende Schicht 24 können auch in umgekehrter Reihenfolge angeordnet sein. Zudem kann die Maskierungsschicht 25 alternativ auch auf der außenseitigen Oberfläche III der Innenscheibe 22 oder auf der innenraumseitigen Oberfläche II der Außenscheibe 21 angeordnet sein oder als ein in die Fahrzeugscheibe eingelegtes, opakes Element oder ein gefärbter Bereich der thermoplastischen Zwischenschicht 23 ausgebildet sein.

Bei einer erfindungsgemäßen Anordnung 1 mit einer Fahrzeugscheibe 3 mit dem in Fig. 19 gezeigten Aufbau strahlt die Bildanzeigevorrichtung 8 bevorzugt p-polarisiertes Licht aus und das ausgestrahlte sichtbare Licht 19 wird von der sichtbares Licht reflektierenden Schicht 24 in Richtung des Fahrzeugnutzers 16 reflektiert und vom Fahrzeugnutzer 16 als virtuelles Bild (von ihm aus gesehen) hinter der Fahrzeugscheibe 3 wahrgenommen.

### Bezugszeichenliste

- 1: Anordnung
- 2: Fahrzeug
- 3: Fahrzeugscheibe
- 4: Nahinfrarotstrahlung reflektierende Funktionsschicht
- 5: Modul
- 6: Strahlungsquelle
- 7: Strahlungsempfänger
- 8: Bildanzeigevorrichtung
- 9: Abdeckelement
- 10: Substrat
- 11: Infrarotstrahlung reflektierende Schicht
- 12: Aussparung
- 13: von der Strahlungsquelle 6 ausgesendete Nahinfrarotstrahlung
- 14: erste Reflexionsstrahlung
- 15: Gesicht
- 16: Fahrzeugnutzer
- 17: zweite Reflexionsstrahlung
- 18: dritte Reflexionsstrahlung
- 19: von der Bildanzeigevorrichtung 8 ausgestrahltes sichtbares Licht
- 20: reflektiertes sichtbares Licht
- 21: Außenscheibe
- 22: Innenscheibe
- 23: thermoplastische Zwischenschicht
- 24: sichtbares Licht reflektierende Schicht
- 25: Maskierungsschicht
- 26: Lenkrad
- 27: Konsole
- A: erster Teilbereich
- B: zweiter Teilbereich
- H: Hauptdurchsichtsbereich
- O: Oberkante
- U: Unterkante
- I: außenseitige Oberfläche der Außenscheibe
- II: innenraumseitige Oberfläche der Außenscheibe
- III: außenseitige Oberfläche der Innenscheibe
- IV: innenraumseitige Oberfläche der Innenscheibe

## Patentansprüche

1. Anordnung (1) für eine Kombination eines Fahrerassistenzsystems und einer Projektionsanordnung für ein Fahrzeug (2), mindestens umfassend
- eine Fahrzeugscheibe (3) mit einer Nahinfrarotstrahlung reflektierenden Funktionsschicht (4) und einem Hauptdurchsichtsbereich (H),
- ein Modul (5) umfassend eine Strahlungsquelle (6) zum Aussenden von Nahinfrarotstrahlung, einen Strahlungsempfänger (7) zum Empfangen von Nahinfrarotstrahlung und eine Bildanzeigevorrichtung (8); und
- ein zwischen der Fahrzeugscheibe (3) und dem Modul (5) zum Schutz des Moduls (5) angeordnetes Abdeckelement (9), welches ein Substrat (10) und eine auf das Substrat (10) aufgebrachte Infrarotstrahlung reflektierende Schicht (11) umfasst,
wobei die Infrarotstrahlung reflektierende Schicht (11) eine Aussparung (12) aufweist; und wobei das Modul (5) und die Fahrzeugscheibe (3) so angeordnet sind und die Aussparung (12) so bemessen ist, dass die Aussparung (12) nicht in einem der Bildanzeigevorrichtung (8) gegenüberliegenden Bereich angeordnet ist, dass von der Strahlungsquelle (6) ausgesendete Nahinfrarotstrahlung (13) durch die Aussparung (12) hindurch auf einen ersten Teilbereich (A) der Fahrzeugscheibe (3) treffen und im ersten Teilbereich (A) von der Nahinfrarotstrahlung reflektierenden Funktionsschicht (4) als erste Reflexionsstrahlung (14) auf das Gesicht (15) eines Fahrzeugnutzers (16) reflektiert werden kann, die erste Reflexionsstrahlung (14) vom Gesicht (15) des Fahrzeugnutzers (16) als zweite Reflexionsstrahlung (17) auf die Nahinfrarotstrahlung reflektierende Funktionsschicht (4) im ersten Teilbereich (A) reflektiert werden kann, und die von der Nahinfrarotstrahlung reflektierenden Funktionsschicht (4) als dritte Reflexionsstrahlung (18) reflektierte zweite Reflexionsstrahlung (17) durch die Aussparung (12) hindurch zum Strahlungsempfänger (7) reflektiert und vom Strahlungsempfänger (7) empfangen werden kann; und dass von der Bildanzeigevorrichtung (8) ausgestrahltes sichtbares Licht (19) auf einen zweiten Teilbereich (B) der Fahrzeugscheibe (3) treffen und von der Fahrzeugscheibe (3) als reflektiertes sichtbares Licht (20) in Richtung des Fahrzeugnutzers (15) reflektiert werden kann.

2. Anordnung (1) nach Anspruch 1, wobei der erste Teilbereich (A) und der zweite Teilbereich (B) im Hauptdurchsichtsbereich (H) angeordnet sind und bevorzugt vollständig überlappen.

3. Anordnung (1) nach Anspruch 1, wobei der erste Teilbereich (A) und der zweite Teilbereich (B) außerhalb des Hauptdurchsichtsbereichs (H), insbesondere in einem Randbereich, der Fahrzeugscheibe (3) angeordnet sind und der erste Teilbereich (A) und der zweite Teilbereich (B) bevorzugt vollständig überlappen.

4. Anordnung (1) nach Anspruch 1, wobei der erste Teilbereich (A) im Hauptdurchsichtsbereich (H) angeordnet ist und der zweite Teilbereich (B) außerhalb des Hauptdurchsichtsbereichs (H), insbesondere in einem Randbereich der Fahrzeugscheibe (3) angeordnet ist.

5. Anordnung (1) nach Anspruch 3, wobei die Fahrzeugscheibe (3) in einem Bereich, welcher außerhalb des Hauptdurchsichtsbereichs (H) angeordnet ist und mit dem ersten Teilbereich (A) und dem zweiten Teilbereich (B) überlappt, eine Maskierungsschicht (25) aufweist, welche in Durchsicht durch die Fahrzeugscheibe (3) von der Strahlungsquelle (6) aus gesehen hinter der Nahinfrarotstrahlung reflektierenden Funktionsschicht (4) angeordnet ist.

6. Anordnung (1) nach Anspruch 4, wobei die Fahrzeugscheibe (3) in einem Bereich, welcher außerhalb des Hauptdurchsichtsbereichs (H) angeordnet ist und mit dem zweiten Teilbereich (B) überlappt, eine Maskierungsschicht (25) aufweist.

7. Anordnung (1) nach Anspruch 5 oder 6, wobei die Maskierungsschicht (25) als eine opake Beschichtung, als ein in die Fahrzeugscheibe (3) eingelegtes, opakes Element oder als ein gefärbter Bereich einer in der Fahrzeugscheibe angeordneten Zwischenschicht ausgebildet ist.

8. Anordnung (1) nach einem der Ansprüche 1 bis 4, wobei die Fahrzeugscheibe (3) zumindest im zweiten Teilbereich (B) eine sichtbares Licht reflektierende Schicht (24) aufweist.

9. Anordnung (1) nach einem der Ansprüche 5 bis 7, wobei die Fahrzeugscheibe (3) zumindest im zweiten Teilbereich (B) eine sichtbares Licht reflektierende Schicht (24) aufweist, welche in Durchsicht durch die Fahrzeugscheibe (3) von der Bildanzeigevorrichtung (8) aus gesehen vor der Maskierungsschicht (25) angeordnet ist.

10. Anordnung (1) nach Anspruch 5, 6, 7 oder 9, wobei die Bildanzeigevorrichtung (8) ein Display ist.

11. Anordnung (1) nach einem der Ansprüche 1 bis 10, wobei das Modul (5) und das Abdeckelement (9) in eine Öffnung einer Oberseite einer Konsole (27) des Fahrzeugs (2) so eingesetzt sind, dass das Abdeckelement (9) im Wesentlichen bündig mit der Oberseite abschließt oder an diese angrenzt.

12. Anordnung (1) nach Anspruch 11, wobei die Öffnung der Oberseite der Konsole (27) zwischen einem Lenkrad (26) und der Fahrzeugscheibe (3) angeordnet ist.

13. Anordnung (1) nach einem der Ansprüche 1 bis 12, wobei das Substrat (10) eine Kunststoffscheibe oder eine Glasscheibe ist und die auf das Substrat (10) aufgebrachte Infrarotstrahlung reflektierende Schicht (11) als eine mehrschichtige dielektrische Beschichtung oder Folie ausgebildet ist.

14. System zum Überwachen eines Fahrzeugnutzers (16) eines Fahrzeugs (2) und zum Einblenden einer Information in ein Sichtfeld des Fahrzeugnutzers (16), mindestens umfassend
- eine Anordnung (1) nach einem der Ansprüche 1 bis 13,
- mindestens einen Aktor und/oder mindestens eine Signalausgabevorrichtung,
- eine elektronische Kontrolleinrichtung, welche dazu eingerichtet ist, auf Basis eines Ausgangssignals des Strahlungsempfängers (7) Informationen über den Fahrzeugnutzer (16) zu ermitteln und auf Basis der ermittelten Informationen ein elektrisches Signal an den mindestens einen Aktor zum Ausführen einer mechanischen Aktion und/oder an die mindestens eine Signalausgabevorrichtung zum Ausgeben eines optischen und/oder akustischen Signals abzugeben.

15. Verwendung der Anordnung (1) nach einem Ansprüche 1 bis 13 in einer Kombination eines Fahrerassistenzsystems mit Überwachungsfunktion für einen Fahrzeugnutzer (16) eines Fahrzeugs (2) für den Verkehr zu Lande, zu Wasser oder in der Luft und einer Projektionsanordnung für das Fahrzeug (2).

## Claims

1. Arrangement (1) for a combination of a driver assistance system and a projection arrangement for a vehicle (2), at least comprising
- a vehicle window (3) with a near-infrared radiation-reflecting functional layer (4) and a main viewing region (H),
- a module (5) comprising a radiation source (6) for emitting near-infrared radiation, a radiation receiver (7) for receiving near-infrared radiation, and an image display device (8); and
- a cover element (9) which is arranged between the vehicle window (3) and the module (5) in order to protect the module (5) and which comprises a substrate (10) and an infrared radiation-reflecting layer (11) applied to the substrate (10),
wherein the infrared radiation-reflecting layer (11) has a cutout (12); and wherein the module (5) and the vehicle window (3) are arranged and the cutout (12) is dimensioned such that the cutout (12) is not arranged in a region opposite the image display device (8), that near-infrared radiation (13) emitted by the radiation source (6) can pass through the cutout (12) and be incident on a first sub-region (A) of the vehicle window (3) and can be reflected in the first sub-region (A) onto the face (15) of a vehicle user (16) as first reflection radiation (14) by the near-infrared radiation-reflecting functional layer (4), which first reflection radiation (14) can be reflected onto the near-infrared radiation-reflecting functional layer (4) in the first sub-region (A) as second reflection radiation (17) by the face (15) of the vehicle user (16), and which second reflection radiation (17) reflected as third reflection radiation (18) by the near-infrared radiation-reflecting functional layer (4) can be reflected through the cutout (12) toward the radiation receiver (7) and can be received by the radiation receiver (7); and that visible light (19) radiated by the image display device (8) can be incident on a second sub-region (B) of the vehicle window (3) and can be reflected in the direction of the vehicle user (15) as reflected visible light (20) by the vehicle window (3).

2. Arrangement (1) according to claim 1, wherein the first sub-region (A) and the second sub-region (B) are arranged in the main viewing region (H) and preferably completely overlap.

3. Arrangement (1) according to claim 1, wherein the first sub-region (A) and the second sub-region (B) are arranged outside the main viewing region (H), in particular in an edge region, of the vehicle window (3) and the first sub-region (A) and the second sub-region (B) preferably completely overlap.

4. Arrangement (1) according to claim 1, wherein the first sub-region (A) is arranged in the main viewing region (H) and the second sub-region (B) is arranged outside the main viewing region (H), in particular in an edge region of the vehicle window (3).

5. Arrangement (1) according to claim 3, wherein the vehicle window (3) has in a region arranged outside the main viewing region (H) and overlapping with the first sub-region (A) and the second sub-region (B) a masking layer (25) which, when viewed through the vehicle window (3) from the radiation source (6), is arranged behind the near-infrared radiation-reflecting functional layer (4).

6. Arrangement (1) according to claim 4, wherein the vehicle window (3) has in a region arranged outside the main viewing region (H) and overlapping with the second sub-region (B) a masking layer (25).

7. Arrangement (1) according to claim 5 or 6, wherein the masking layer (25) is designed as an opaque coating, as an opaque element embedded in the vehicle window (3), or as a colored region of an intermediate layer arranged in the vehicle window.

8. Arrangement (1) according to any of claims 1 to 4, wherein the vehicle window (3) has at least in the second sub-region (B) a visible light-reflecting layer (24).

9. Arrangement (1) according to any of claims 5 to 7, wherein the vehicle window (3) has at least in the second sub-region (B) a visible light-reflecting layer (24) which, when viewed through the vehicle window (3) from the image display device (8), is arranged in front of the masking layer (25).

10. Arrangement (1) according to claim 5, 6, 7, or 9, wherein the image display device (8) is a display.

11. Arrangement (1) according to any of claims 1 to 10, wherein the module (5) and the cover element (9) are inserted into an opening in an upper surface of a console (27) of the vehicle (2) such that the cover element (9) ends substantially flush with the upper surface or is adjacent thereto.

12. Arrangement (1) according to claim 11, wherein the opening in the upper surface of the console (27) is arranged between a steering wheel (26) and the vehicle window (3).

13. Arrangement (1) according to any of claims 1 to 12, wherein the substrate (10) is a plastics sheet or a glass sheet and the infrared radiation-reflecting layer (11) applied to the substrate (10) is designed as a multilayer dielectric coating or film.

14. System for monitoring a vehicle user (16) of a vehicle (2) and for overlaying information in a field of vision of the vehicle user (16), at least comprising
- an arrangement (1) according to any of claims 1 to 13,
- at least one actuator and/or at least one signal output device,
- an electronic control apparatus configured to ascertain on the basis of an output signal of the radiation receiver (7) information about the vehicle user (16), and to emit on the basis of the ascertained information an electrical signal to the at least one actuator for performing a mechanical action and/or to the at least one signal output device for outputting a visual and/or acoustic signal.

15. Use of the arrangement (1) according to any of claims 1 to 13 in a combination of a driver assistance system, with a monitoring function for a vehicle user (16) of a vehicle (2) for traffic on land, in the water, or in the air, and a projection arrangement for the vehicle (2).

## Revendications

1. Agencement (1) pour une combinaison d'un système d'assistance au conducteur et d'un agencement de projection pour un véhicule (2), comprenant au moins
- une vitre de véhicule (3) comportant une couche fonctionnelle réfléchissant le rayonnement proche infrarouge (4) et une zone de transparence principale (H),
- un module (5) comprenant une source de rayonnement (6) pour l'émission d'un rayonnement proche infrarouge, un récepteur de rayonnement (7) pour la réception d'un rayonnement proche infrarouge et un dispositif d'affichage d'image (8) ; et
- un élément de recouvrement (9) disposé entre la vitre de véhicule (3) et le module (5) pour la protection du module (5), lequel élément de recouvrement comprend un substrat (10) et une couche réfléchissant le rayonnement infrarouge (11) appliquée sur le substrat (10),
dans lequel la couche réfléchissant le rayonnement infrarouge (11) présente un évidement (12) ; et dans lequel le module (5) et la vitre de véhicule (3) sont disposés et l'évidement (12) est dimensionné de sorte que l'évidement (12) n'est pas disposé dans une zone opposée au dispositif d'affichage d'image (8), que le rayonnement proche infrarouge (13) émis par la source de rayonnement (6) peut atteindre une première zone partielle (A) de la vitre de véhicule (3) à travers l'évidement (12) et peut être réfléchi dans la première zone partielle (A) par la couche fonctionnelle réfléchissant le rayonnement proche infrarouge (4) en tant que premier rayonnement de réflexion (14) sur le visage (15) d'un utilisateur de véhicule (16), le premier rayonnement de réflexion (14) peut être réfléchi par le visage (15) de l'utilisateur de véhicule (16) en tant que deuxième rayonnement de réflexion (17) sur la couche fonctionnelle réfléchissant le rayonnement proche infrarouge (4) dans la première zone partielle (A), et le deuxième rayonnement de réflexion (17) réfléchi par la couche fonctionnelle réfléchissant le rayonnement proche infrarouge (4) peut être réfléchi à travers l'évidement (12) vers le récepteur de rayonnement (7) et être reçu par le récepteur de rayonnement (7) en tant que troisième rayonnement de réflexion (18) ; et de sorte que la lumière visible (19) émise par le dispositif d'affichage d'image (8) peut atteindre une seconde zone partielle (B) de la vitre de véhicule (3) et être réfléchie par la vitre de véhicule (3) en tant que lumière visible réfléchie (20) en direction de l'utilisateur de véhicule (15).

2. Agencement (1) selon la revendication 1, dans lequel la première zone partielle (A) et la seconde zone partielle (B) sont disposées dans la zone de transparence principale (H) et se chevauchent de préférence complètement.

3. Agencement (1) selon la revendication 1, dans lequel la première zone partielle (A) et la seconde zone partielle (B) sont disposées à l'extérieur de la zone de transparence principale (H), en particulier dans une zone marginale, de la vitre de véhicule (3), et la première zone partielle (A) et la seconde zone partielle (B) se chevauchent de préférence complètement.

4. Agencement (1) selon la revendication 1, dans lequel la première zone partielle (A) est disposée dans la zone de transparence principale (H) et la seconde zone partielle (B) est disposée à l'extérieur de la zone de transparence principale (H), en particulier dans une zone marginale de la vitre de véhicule (3).

5. Agencement (1) selon la revendication 3, dans lequel la vitre de véhicule (3) présente, dans une zone qui est disposée à l'extérieur de la zone de transparence principale (H) et qui chevauche la première zone partielle (A) et la seconde zone partielle (B), une couche de masquage (25) qui, vue en transparence à travers la vitre de véhicule (3) depuis la source de rayonnement (6), est disposée derrière la couche fonctionnelle réfléchissant le rayonnement proche infrarouge (4).

6. Agencement (1) selon la revendication 4, dans lequel la vitre de véhicule (3) présente une couche de masquage (25) dans une zone qui est disposée à l'extérieur de la zone de transparence principale (H) et qui chevauche la seconde zone partielle (B).

7. Agencement (1) selon la revendication 5 ou 6, dans lequel la couche de masquage (25) est réalisée sous forme de revêtement opaque, d'élément opaque inséré dans la vitre de véhicule (3) ou de zone colorée d'une couche intermédiaire disposée dans la vitre de véhicule.

8. Agencement (1) selon l'une des revendications 1 à 4, dans lequel la vitre de véhicule (3) présente, au moins dans la seconde zone partielle (B), une couche réfléchissant la lumière visible (24).

9. Agencement (1) selon l'une des revendications 5 à 7, dans lequel la vitre de véhicule (3) présente, au moins dans la seconde zone partielle (B), une couche réfléchissant la lumière visible (24) qui, vue en transparence à travers la vitre de véhicule (3) depuis le dispositif d'affichage d'image (8), est disposée avant la couche de masquage (25).

10. Agencement (1) selon la revendication 5, 6, 7 ou 9, dans lequel le dispositif d'affichage d'image (8) est un écran.

11. Agencement (1) selon l'une des revendications 1 à 10, dans lequel le module (5) et l'élément de recouvrement (9) sont insérés dans une ouverture d'un côté supérieur d'une console (27) du véhicule (2) de sorte que l'élément de recouvrement (9) affleure sensiblement le côté supérieur ou est adjacent à celui-ci.

12. Agencement (1) selon la revendication 11, dans lequel l'ouverture du côté supérieur de la console (27) est disposée entre un volant (26) et la vitre de véhicule (3).

13. Agencement (1) selon l'une des revendications 1 à 12, dans lequel le substrat (10) est une vitre en matière plastique ou une vitre en verre et la couche réfléchissant le rayonnement infrarouge (11) appliquée sur le substrat (10) est réalisée sous forme de revêtement ou film diélectrique multicouches.

14. Système permettant de surveiller un utilisateur de véhicule (16) d'un véhicule (2) et permettant d'insérer une information dans un champ de vision de l'utilisateur de véhicule (16), comprenant au moins
- un agencement (1) selon l'une des revendications 1 à 13,
- au moins un actionneur et/ou au moins un dispositif de sortie de signal,
- un appareil de contrôle électronique qui est configuré pour déterminer, sur la base d'un signal de sortie du récepteur de rayonnement (7), des informations concernant l'utilisateur de véhicule (16) et pour délivrer, sur la base des informations déterminées, un signal électrique à l'au moins un actionneur pour exécuter une action mécanique et/ou à l'au moins un dispositif de sortie de signal pour délivrer un signal optique et/ou acoustique.

15. Utilisation de l'agencement (1) selon l'une des revendications 1 à 13 dans une combinaison d'un système d'assistance au conducteur avec une fonction de surveillance pour un utilisateur de véhicule (16) d'un véhicule (2) pour la circulation terrestre, maritime ou aérienne et d'un agencement de projection pour le véhicule (2).
